(19) Europäisches Patentamt
European Patent Office
Office européen des brevets

(11) EP 4 683 422 A1

(12) EUROPEAN PATENT APPLICATION
published in accordance with Art. 153(4) EPC

(43) Date of publication:
21.01.2026 Bulletin 2026/04

(51) International Patent Classification (IPC):
H04W 74/08 (2024.01)

(21) Application number: 24769896.2

(52) Cooperative Patent Classification (CPC):
H04L 1/1607; H04W 72/0453; H04W 72/231;
H04W 72/232; H04W 74/00; H04W 74/08;
H04W 74/0833

(22) Date of filing: 11.03.2024

(86) International application number:
PCT/CN2024/080904

(87) International publication number:
WO 2024/188203 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(72) Inventors:
• LIU, Zheng
  Shanghai 201206 (CN)
• ZHANG, Xiaobo
  Shanghai 201206 (CN)

(74) Representative: Gunzelmann, Rainer
Wuesthoff & Wuesthoff
Patentanwälte und Rechtsanwalt PartG mbB
Schweigerstraße 2
81541 München (DE)

(30) Priority: 14.03.2023 CN 202310252894

(71) Applicant: Apogee Networks, LLC
Dallas, TX 75201 (US)

(54) **METHOD AND DEVICE USED IN NODE FOR WIRELESS COMMUNICATION**

(57) The present application discloses a method and device used in a node for wireless communication. A node receives a first PDCCH; the node transmits a first signal, wherein the first PDCCH is used for triggering the transmission of the first signal, and the first signal carries a random access preamble sequence; the node receives a second PDCCH, wherein the second PDCCH is used for responding to the first signal; and the node transmits a first feedback information block; the first signal is associated with a first cell, and the first cell is a cell other than a cell to which the first PDCCH belongs; the second PDCCH is used for determining a target information block, the target information block is used for determining a timing advance value for the first cell, and the first feedback information block is used for indicating whether the target information block is valid. The present application improves handover performance.

100

Receive a first PDCCH —101

Transmit a first signal —102

Receive a second PDCCH —103

Transmit a first feedback information block —104

FIG. 1

EP 4 683 422 A1

## Description

### Technical Field

The present application relates to a transport method and device used in a wireless communication system, in particular to a mobility management method and device in wireless communication.

### Background Art

Application scenarios of a wireless communication system are becoming increasingly diversified in the future, and different application scenarios will impose different performance requirements for the system. In order to meet the different performance requirements of various application scenarios, the 3GPP (3rd Generation Partner Project) RAN (Radio Access Network) #72 plenary meeting decided to study the new radio technology (NR, New Radio) (or 5G). A WI (Work Item) of the new radio technology (NR, New Radio) was passed at the 3GPP RAN #75 plenary meeting, and standardization work on NR was initiated.

In the new radio technology, supporting mobility is one of the most basic requirements. In order to adapt to various application scenarios and meet different needs, the 3GPP has been evolving technologies for mobility management.

### Summary of the Invention

When UE (User Equipment) moves from a coverage range of one cell to a coverage range of another cell, it is necessary to change a serving cell of the UE, that is, hand over from a source cell to a target cell. An existing serving cell change is usually triggered by L3 (Layer 3) measurement, and is implemented through reconfiguration with synchronization triggered by RRC (Radio Resource Control) signaling. The serving cell change implemented in L3 has characteristics of a long delay, large signaling overhead, and long interrupt time. In order to overcome the above shortcomings, the 3GPP (3rd Generation Partner Project) RAN (Radio Access Network) introduced technologies such as dual connectivity (DC), conditional PSCell change (Conditional PSCell (Primary SCG (Secondary Cell Group) Cell) change, CPC), conditional PSCell increase (CPA), conditional handover (CHO) in Rel (version)-17. These technologies are all implemented based on L3. At the 3GPP RAN #94e plenary meeting, it was decided to start WI (Work Item) standardization work for the mobility enhancement technology based on L1/L2 (Layer 1/Layer 2). A design goal of the mobility enhancement technology based on L1/L2 is to achieve rapid handover of serving cells of UE. For a demand for the mobility enhancement technology in an NR system, the present application discloses a solution. It should be noted that in the descriptions of the present application, mobility enhancement is only used as a typical application scenario or example. The design in the present application is further applicable to other scenarios facing similar problems (such as other scenarios that require a cell timing advance, including but not limited to a multi-antenna system, a multi-TRP (transmitter receiver point) system, a capacity enhancement system, a short-range communication system, unlicensed frequency domain communication, IoT (Internet of Things), a URLLC (Ultra Reliable Low Latency Communication) network, Internet of Vehicles, and the like), and similar technical effects can still be achieved. In addition, using a unified solution for different scenarios (including but not limited to multi-carrier scenarios) can further help reduce hardware complexity and costs. In case of no conflict, embodiments and features in the embodiments in a first node device of the present application can be applied to a second node device, and vice versa. In particular, the interpretation of the terminologies, nouns, functions, and variables in the present application (if not otherwise specified) can refer to the definitions in 3GPP specification protocol TS36 series, TS38 series, and TS37 series.

The present application discloses a method used in a first node for wireless communication, characterized by comprising:

> receiving a first PDCCH;
> transmitting a first signal, wherein the first PDCCH is used for triggering transmission of the first signal, and the first signal carries a random access preamble sequence;
> receiving a second PDCCH, wherein the second PDCCH is used for responding to the first signal; and
> transmitting a first feedback information block,
> wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

As one embodiment, introduction of the first feedback information block for the target information block ensures correct reception of timing advance (TA) information for the first cell.

As one embodiment, introduction of the first feedback information block for the target information block ensures that a network and user equipment have a same understanding of the timing advance (TA) information for the first cell, thereby ensuring smooth implementation of a handover procedure.

According to one aspect of the present application, the above method is characterized in that a time interval length between the first PDCCH and the first signal in time domain is not less than a first threshold, and a relationship between both of the first cell and the cell to which the first PDCCH belongs is used for determining the first threshold.

As one embodiment, the first threshold being associated with the relationship between both of the first cell and the cell to which the first PDCCH belongs considers different latency requirements in different scenarios and reduces product implementation complexity.

According to one aspect of the present application, the above method is characterized in that the second PDCCH carries a first identifier, and the first identifier is equal to an RNTI carried by the first PDCCH, or an air interface resource occupied by the first signal and an index value with which the first cell is associated are used together for determining the first identifier.

According to one aspect of the present application, the above method is characterized in that the second PDCCH belongs to a target time window in time domain, and at least one of a time length of the target time window or a start moment of the target time window is configured through signaling; and the target time window and a random access response window associated with the cell to which the first PDCCH belongs are different.

According to one aspect of the present application, the above method is characterized in that the target information block comprises at least one of an index value of the air interface resource occupied by the first signal or the index value with which the first cell is associated.

According to one aspect of the present application, the above method is characterized in that the second PDCCH is used for determining a time-frequency resource occupied by the target information block, and at least one of the second PDCCH or the target information block is used for determining the time interval length between the target information block and the first feedback information block; or the second PDCCH carries the target information block, and the target information block is used for determining a time interval length between the second PDCCH and the first feedback information block.

According to one aspect of the present application, the above method is characterized by comprising:

receiving a first information block,
wherein the first information block is used for determining a power ramping step, the first PDCCH is used for determining a first count value, and the power ramping step and the first count value are used together for determining a transmit power value of the first signal.

The present application discloses a method used in a second node for wireless communication, characterized by comprising:

transmitting a first PDCCH;
receiving a first signal, wherein the first PDCCH is used for triggering transmission of the first signal, and the first signal carries a random access preamble sequence;
transmitting a second PDCCH, wherein the second PDCCH is used for responding to the first signal; and
receiving a first feedback information block,
wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

According to one aspect of the present application, the above method is characterized in that a time interval length between the first PDCCH and the first signal in time domain is not less than a first threshold, and a relationship between both of the first cell and the cell to which the first PDCCH belongs is used for determining the first threshold.

According to one aspect of the present application, the above method is characterized in that the second PDCCH carries a first identifier, and the first identifier is equal to an RNTI carried by the first PDCCH, or an air interface resource occupied by the first signal and an index value with which the first cell is associated are used together for determining the first identifier.

According to one aspect of the present application, the above method is characterized in that the second PDCCH belongs to a target time window in time domain, and at least one of a time length of the target time window or a start moment of the target time window is configured through signaling; and the target time window and a random access response window associated with the cell to which the first PDCCH belongs are different.

According to one aspect of the present application, the above method is characterized in that the target information block comprises at least one of an index value of the air interface resource occupied by the first signal or the index value with which the first cell is associated.

According to one aspect of the present application, the above method is characterized in that the second PDCCH is used for determining a time-frequency resource occupied by the target information block, and at least one of the second PDCCH or the target information block is used for determining the time interval length between the target information block and the first feedback information block; or the second PDCCH carries the target information block, and the target information block is used for determining a time interval length between the second PDCCH and the first feedback information block.

According to one aspect of the present application, the above method is characterized by comprising:

transmitting a first information block,
wherein the first information block is used for determining a power ramping step, the first PDCCH is used for determining a first count value, and the power ramping step and the first count value are used together for determining a transmit power value of the first signal.

The present application discloses a first node device used in wireless communication, characterized by comprising:

a first receiver receiving a first PDCCH;
a first transmitter transmitting a first signal, wherein the first PDCCH is used for triggering transmission of the first signal, and the first signal carries a random access preamble sequence;
the first receiver receiving a second PDCCH, wherein the second PDCCH is used for responding to the first signal;
the first transmitter transmitting a first feedback information block,
wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

The present application discloses a second node device used in wireless communication, characterized by comprising:

a second transmitter transmitting a first PDCCH;
a second receiver receiving a first signal, wherein the first PDCCH is used for triggering transmission of the first signal, and the first signal carries a random access preamble sequence;
the second transmitter transmitting a second PDCCH, wherein the second PDCCH is used for responding to the first signal; and
the second receiver receiving a first feedback information block,
wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

**Brief Description of the Drawings**

By reading the detailed descriptions of non-limiting embodiments in the following drawings, other features, purposes and advantages of the present application will be more obvious:

FIG. 1 shows a flowchart of a first PDCCH, a first signal, a second PDCCH, and a first feedback information block according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first node device and a second node device according to one embodiment of the present application;
FIG. 5 shows a flowchart of wireless signal transport according to one embodiment of the present application;
FIG. 6 shows a schematic diagram of a relationship between a first PDCCH and a first signal according to one embodiment of the present application;
FIG. 7 shows a schematic diagram of a first identifier according to one embodiment of the present application;

FIG. 8 shows a schematic diagram of a target time window according to one embodiment of the present application;

FIG. 9 shows a schematic diagram of a target information block according to one embodiment of the present application;

FIG. 10 shows a schematic diagram of a first feedback information block according to one embodiment of the present application;

FIG. 11 shows a schematic diagram of a power ramping step according to one embodiment of the present application;

FIG. 12 shows a structural block diagram of a processing device in a first node device according to one embodiment of the present application; and

FIG. 13 shows a structural block diagram of a processing device in a second node device according to one embodiment of the present application.

## Detailed Description of Embodiments

The technical solution of the present application will be further described in detail below in conjunction with the accompanying drawings. It should be noted that, in case of no conflict, embodiments and features in the embodiments of the present application can be arbitrarily combined with each other.

Embodiment **1**

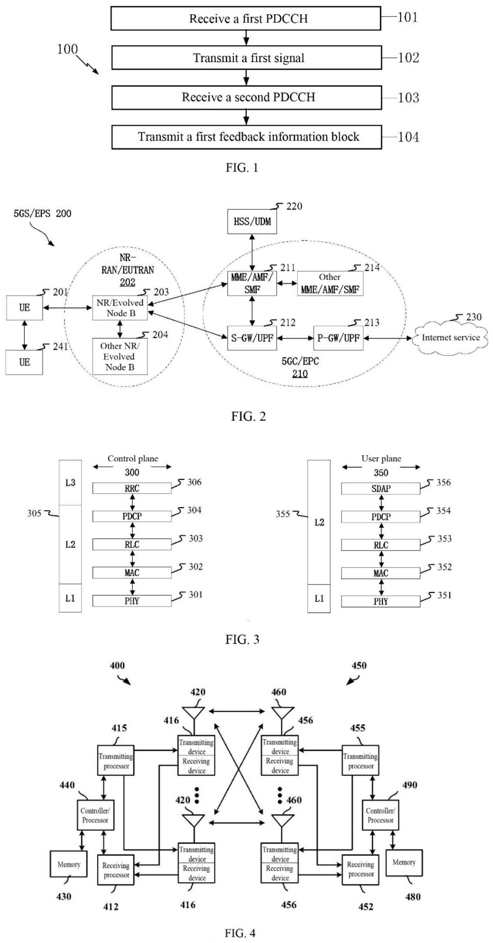

Embodiment 1 illustrates a flowchart 100 of a first PDCCH, a first signal, a second PDCCH, and a first feedback information block according to one embodiment of the present application, as shown in FIG. 1. In FIG. 1, each block represents one step. It is particularly emphasized that the order of various blocks in the figure does not limit a temporal order of the steps represented.

In Embodiment 1, a first node device in the present application receives the first PDCCH in step 101; the first node device in the present application transmits a first signal in step 102, wherein the first PDCCH is used for triggering transmission of the first signal, and the first signal carries a random access preamble sequence; the first node device in the present application receives a second PDCCH in step 103, wherein the second PDCCH is used for responding to the first signal; and the first node device in the present application transmits a first feedback information block in step 104, wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

As one embodiment, introduction of the first feedback information block for the target information block ensures correct reception of timing advance (TA) information for the first cell.

As one embodiment, introduction of the first feedback information block for the target information block ensures that a network and user equipment have a same understanding of the timing advance (TA) information for the first cell, thereby ensuring smooth implementation of a handover procedure.

As one embodiment, the first PDCCH is a baseband signal of a PDCCH (physical downlink control channel).

As one embodiment, the first PDCCH is a radio frequency signal of a PDCCH.

As one embodiment, the first PDCCH is a PDCCH order.

As one embodiment, the first PDCCH carries DCI (downlink control information) used for a PDCCH order.

As one embodiment, the first PDCCH carries all or part of fields in a DCI format 1_0.

As one embodiment, the DCI format 1_0 is used for generating the first PDCCH.

As one embodiment, a frequency domain resource assignment field included in DCI carried by the first PDCCH is equal to all "1".

As one embodiment, bits of a frequency domain resource assignment field included in DCI carried by the first PDCCH are all set as "1".

As one embodiment, CRC in a DCI format of DCI carried by the first PDCCH is scrambled by a C-RNTI (Cell-Radio Network Temporary Identifier).

As one embodiment, a PDCCH candidate occupied by the first PDCCH belongs to a common search space (CSS) set.

As one embodiment, the PDCCH candidate occupied by the first PDCCH belongs to a UE specific search space (USS) set.

As one embodiment, the first signal is a PRACH (physical random access channel).

As one embodiment, the first signal is a radio frequency signal or a baseband signal of a PRACH.

As one embodiment, the first signal is used for a random access procedure.

As one embodiment, the first signal is used for an LTM (L1/L2-triggered mobility) procedure.

As one embodiment, the first signal is used for triggering a random access procedure of LTM.

As one embodiment, the technical feature of "the first PDCCH is used for triggering transmission of the first signal" comprises the following meaning: the first PDCCH is used for explicitly or implicitly indicating a resource occupied by the first signal.

As one embodiment, the technical feature of "the first PDCCH is used for triggering transmission of the first signal" comprises the following meaning: the first PDCCH is used for explicitly or implicitly indicating a random access preamble sequence carried by the first signal.

As one embodiment, the technical feature of "the first PDCCH is used for triggering transmission of the first signal" comprises the following meaning: the first PDCCH is used for explicitly or implicitly indicating an index of an SS/PBCH associated with the first signal.

As one embodiment, the technical feature of "the first PDCCH is used for triggering transmission of the first signal" comprises the following meaning: the first PDCCH is used by a sender of the first PDCCH in the present application for triggering/initiating the transmission of the first signal.

As one embodiment, the technical feature of "the first PDCCH is used for triggering transmission of the first signal" comprises the following meaning: the first PDCCH is used for explicitly or implicitly configuring or scheduling at least one parameter of the first signal.

As one embodiment, the technical feature of "the first PDCCH is used for triggering transmission of the first signal" comprises the following meaning: the transmission of the first signal is a response to the first PDCCH.

As one embodiment, the technical feature of "the first PDCCH is used for triggering transmission of the first signal" comprises the following meaning: the first PDCCH is used for explicitly or implicitly indicating the first node device to transmit the first signal.

As one embodiment, the technical feature of "the first signal carries a random access preamble sequence" comprises the following meaning: the first signal is used for transporting the random access preamble sequence.

As one embodiment, the technical feature of "the first signal carries a random access preamble sequence" comprises the following meaning: the random access preamble sequence is transported on the first signal.

As one embodiment, the technical feature of "the first signal carries a random access preamble sequence" comprises the following meaning: the random access preamble sequence is used for generating the first signal.

As one embodiment, the technical feature of "the first signal carries a random access preamble sequence" comprises the following meaning: the random access preamble sequence is mapped to a physical resource allocated to the first signal.

As one embodiment, a ZC (Zadoff-Chu) sequence is used for generating the random access preamble sequence carried by the first signal.

As one embodiment, a pseudo-random sequence is used for generating the random access preamble sequence carried by the first signal.

As one embodiment, the random access preamble sequence carried by the first signal uses a preamble sequence format 0.

As one embodiment, the random access preamble sequence carried by the first signal uses a preamble sequence format 1.

As one embodiment, the random access preamble sequence carried by the first signal uses a preamble sequence format 2.

As one embodiment, the random access preamble sequence carried by the first signal uses a preamble sequence format 3.

As one embodiment, the random access preamble sequence carried by the first signal uses one of a preamble sequence format A1, a preamble sequence format A2, a preamble sequence format A3, a preamble sequence format B1, a preamble sequence format B2, a preamble sequence format B3, a preamble sequence format B4, a preamble sequence format C0, and a preamble sequence format C2.

As one embodiment, a preamble sequence format used by the random access preamble sequence carried by the first signal is configured through signaling.

As one embodiment, a sequence length of the random access preamble sequence carried by the first signal is equal to 139, 571, 839, or 1151.

As one embodiment, the second PDCCH is a baseband signal or a radio frequency signal of a PDCCH.

As one embodiment, the second PDCCH is used for carrying (or transporting) DCI.

As one embodiment, a DCI bit is used for generating the second PDCCH.

As one embodiment, the second PDCCH carries DCI using a DCI format 1_0.

As one embodiment, the second PDCCH carries DCI using a DCI format 1_1.

As one embodiment, the second PDCCH carries DCI using a DCI format 1_2.

As one embodiment, the second PDCCH carries DCI using a DCI format 2_k, wherein k is a non-negative integer.

As one embodiment, CRC of the second PDCCH is scrambled by a C-RNTI.

As one embodiment, CRC in a DCI format that is used by DCI carried by the second PDCCH is scrambled by a C-RNTI.

As one embodiment, CRC of the second PDCCH is scrambled by an RA-RNTI (Random Access Radio Network Temporary Identifier).

As one embodiment, CRC in a DCI format that is used by DCI carried by the second PDCCH is scrambled by an RA-RNTI.

As one embodiment, CRC of the second PDCCH is scrambled by an LTM-RNTI.

As one embodiment, CRC in a DCI format that is used by DCI carried by the second PDCCH is scrambled by an LTM-RNTI.

As one embodiment, CRC of the second PDCCH is scrambled by a target RNTI, wherein the target RNTI is configured through signaling. As one dependent embodiment of the above embodiment, the target RNTI is configured through RRC (radio resource control) layer signaling. As one dependent embodiment of the above embodiment, the target RNTI is configured through MAC (medium access control) layer signaling. As one dependent embodiment of the above embodiment, the target RNTI is configured through signaling for configuring (or triggering) LTM. As one dependent embodiment of the above embodiment, the target RNTI is configured through signaling for the first cell. As one dependent embodiment of the above embodiment, the target RNTI is configured through signaling for configuring (or triggering) LTM for the first cell. As one dependent embodiment of the above embodiment, the target RNTI is configured through user equipment-specific (UE-specific) signaling.

As one embodiment, CRC in the DCI format that is used by DCI carried by the second PDCCH is scrambled by a target RNTI, wherein the target RNTI is configured through signaling. As one dependent embodiment of the above embodiment, the target RNTI is configured through RRC (radio resource control) layer signaling. As one dependent embodiment of the above embodiment, the target RNTI is configured through MAC (medium access control) layer signaling. As one dependent embodiment of the above embodiment, the target RNTI is configured through signaling for configuring (or triggering) LTM. As one dependent embodiment of the above embodiment, the target RNTI is configured through signaling for the first cell. As one dependent embodiment of the above embodiment, the target RNTI is configured through signaling for configuring (or triggering) LTM for the first cell. As one dependent embodiment of the above embodiment, the target RNTI is configured through user equipment-specific (UE-specific) signaling.

As one embodiment, at least one fixed (or predefined) field included in DCI carried by the second PDCCH is set to a predefined value.

As one embodiment, a frequency domain resource assignment field included in DCI carried by the second PDCCH is equal to all "1".

As one embodiment, a PDCCH candidate occupied by the second PDCCH belongs to a common search space set.

As one embodiment, a PDCCH candidate occupied by the second PDCCH belongs to a common search space set of a type 1.

As one embodiment, a PDCCH candidate occupied by the second PDCCH belongs to a common search space set of a type 1A.

As one embodiment, a PDCCH candidate occupied by the second PDCCH belongs to a common search space set of a type 1B.

As one embodiment, a PDCCH candidate occupied by the second PDCCH belongs to a user equipment-specific search space set.

As one embodiment, a search space set to which a PDCCH candidate occupied by the second PDCCH belongs exclusively occupies one CORESET (control resource set).

As one embodiment, a search space set to which a PDCCH candidate occupied by the second PDCCH belongs exclusively occupies one CORESET (control resource set) in the target time window in the present application.

As one embodiment, a search space set to which a PDCCH candidate occupied by the second PDCCH belongs is not associated with a same CORESET as any other search space set.

As one embodiment, a search space set to which a PDCCH candidate occupied by the second PDCCH belongs is not associated with a same CORESET as any other search space set in the target time window in the present application.

As one embodiment, a search space set to which a PDCCH candidate occupied by the second PDCCH belongs is configured through signaling.

As one embodiment, a first search space set is a search space set to which a PDCCH candidate occupied by the second PDCCH belongs, and the first node device does not expect to monitor, within a CORESET associated with the first search space set, a PDCCH belonging to another search space set.

As one embodiment, a first search space set is a search space set to which a PDCCH candidate occupied by the second PDCCH belongs, and the first node device does not expect complete or partial overlapping in time domain between another search space set associated with a same CORESET as the first search space set and the first search space set.

As one embodiment, a first search space set is a search space set to which a PDCCH candidate occupied by the second PDCCH belongs, and the first node device does not expect a monitoring occasion (MO) at which another search space set associated with a same CORESET as the first search space set and the first search space set completely or partially overlap in time domain.

As one embodiment, a first search space set is a search space set to which a PDCCH candidate occupied by the second PDCCH belongs, and the first node device does not expect to monitor, in the target time window in the present application within a CORESET associated with the first search space set, a PDCCH belonging to another search space set.

As one embodiment, a first search space set is a search space set to which a PDCCH candidate occupied by the second PDCCH belongs, and the first node device does not expect complete or partial overlapping in time domain in the target time window in the present application between another search space set associated with a same CORESET as the first search space set and the first search space set.

As one embodiment, a first search space set is a search space set to which a PDCCH candidate occupied by the second PDCCH belongs, and the first node device does not expect a monitoring occasion (MO) at which another search space set associated with a same CORESET as the first search space set and the first search space set completely or partially overlap in time domain in the target time window in the present application.

As one embodiment, the first PDCCH and the second PDCCH belong to a same cell.

As one embodiment, the first PDCCH and the second PDCCH belong to different cells, respectively.

As one embodiment, the second PDCCH belongs to the first cell.

As one embodiment, the technical feature of "the second PDCCH is used for responding to the first signal" comprises the following meaning: the second PDCCH is used by a sender of the second PDCCH for responding to the first signal.

As one embodiment, the technical feature of "the second PDCCH is used for responding to the first signal" comprises the following meaning: a signal or a channel that responds to the first signal comprises the second PDCCH.

As one embodiment, the technical feature of "the second PDCCH is used for responding to the first signal" comprises the following meaning: the second PDCCH is transmitted for the first signal.

As one embodiment, the technical feature of "the second PDCCH is used for responding to the first signal" comprises the following meaning: the first signal triggers transport of the second PDCCH.

As one embodiment, the technical feature of "the second PDCCH is used for responding to the first signal" comprises the following meaning: the first signal is used for determining a start moment of the target time window in the present application.

As one embodiment, the technical feature of "the second PDCCH is used for responding to the first signal" comprises the following meaning: the first signal is used for determining a time-frequency resource occupied by the second PDCCH.

As one embodiment, the technical feature of "the second PDCCH is used for responding to the first signal" comprises the following meaning: the first signal is used for determining a cell to which the second PDCCH belongs.

As one embodiment, the technical feature of "the second PDCCH is used for responding to the first signal" comprises the following meaning: the first signal is used for determining a time window to which the second PDCCH belongs in time domain.

As one embodiment, the technical feature of "the second PDCCH is used for responding to the first signal" comprises the following meaning: the first signal is used for determining a CORESET to which the second PDCCH belongs.

As one embodiment, the technical feature of "the second PDCCH is used for responding to the first signal" comprises the following meaning: the first signal is used for determining a cell to which the second PDCCH belongs, wherein the cell to which the second PDCCH belongs is used for determining a CORESET to which the second PDCCH belongs.

As one embodiment, the technical feature of "the second PDCCH is used for responding to the first signal" comprises the following meaning: the first signal is used for determining a type of an RNTI or a value of an RNTI carried by the second PDCCH.

As one embodiment, the technical feature of "the second PDCCH is used for responding to the first signal" comprises the following meaning: an air interface resource occupied by the first signal is used for determining the first identifier in the present application carried by the second PDCCH.

As one embodiment, the technical feature of "the second PDCCH is used for responding to the first signal" comprises the following meaning: the first signal and the second PDCCH belong to a same random access procedure.

As one embodiment, the technical feature of "the second PDCCH is used for responding to the first signal" comprises the following meaning: the second PDCCH belongs to a random access procedure initiated or triggered by the first signal.

As one embodiment, the technical feature of "the second PDCCH is used for responding to the first signal" comprises the following meaning: the first signal and the second PDCCH belong to a same LTM procedure.

As one embodiment, the technical feature of "the second PDCCH is used for responding to the first signal" comprises the following meaning: the second PDCCH belongs to an LTM procedure initiated or triggered by the first signal.

As one embodiment, the technical feature of "the second PDCCH is used for responding to the first signal" comprises the following meaning: the second PDCCH is later than the first signal in time domain.

As one embodiment, the technical feature of "the second PDCCH is used for responding to the first signal" comprises the following meaning: the second PDCCH is an earliest PDCCH that carries a timing advance value for the first cell and that is at least a first time length later in time domain than the first signal, wherein the first time length is predefined, or is configurable, or is related to a capability of the first node device.

As one embodiment, the technical feature of "the second PDCCH is used for responding to the first signal" comprises the following meaning: the second PDCCH is a latest PDCCH that carries a timing advance value for the first cell and that is at least a first time length later in time domain than the first signal, wherein the first time length is predefined, or is configurable, or is related to a capability of the first node device.

As one embodiment, the technical feature of "the second PDCCH is used for responding to the first signal" comprises the following meaning: the second PDCCH is a PDCCH with a smallest or largest CORESET index among all earliest PDCCHs that carry a timing advance value for the first cell and that are at least a first time length later than the first signal in time domain, where the first time length is predefined, or is configurable, or is related to a capability of the first node device.

As one embodiment, the technical feature of "the second PDCCH is used for responding to the first signal" comprises the following meaning: the second PDCCH is a PDCCH with a smallest or largest CORESET index among all latest PDCCHs that carry a timing advance value for the first cell and that are at least a first time length later than the first signal in time domain, where the first time length is predefined, or is configurable, or is related to a capability of the first node device.

As one embodiment, the technical feature of "the second PDCCH is used for responding to the first signal" comprises the following meaning: a target PDSCH is an earliest PDSCH (physical downlink shared channel) that carries a timing advance value for the first cell and that is at least a second time length later than the first signal in time domain, wherein the second PDCCH is a PDCCH used for scheduling the target PDSCH, and the second time length is predefined, or is configurable, or is related to a capability of the first node device.

As one embodiment, the technical feature of "the second PDCCH is used for responding to the first signal" comprises the following meaning: a target PDSCH is a latest PDSCH that carries a timing advance value for the first cell and that is at least a second time length later than the first signal in time domain, wherein the second PDCCH is a PDCCH used for scheduling the target PDSCH, and the second time length is predefined, or is configurable, or is related to a capability of the first node device.

As one embodiment, the technical feature of "the second PDCCH is used for responding to the first signal" comprises the following meaning: a target PDSCH is a PDSCH with a smallest or largest CORESET index among scheduling PDCCHs of all earliest PDSCHs that carry a timing advance value for the first cell and that are at least a second time length later than the first signal in time domain, the second PDCCH is a PDCCH used for scheduling the target PDSCH, and the second time length is predefined, or is configurable, or is related to a capability of the first node device.

As one embodiment, the technical feature of "the second PDCCH is used for responding to the first signal" comprises the following meaning: a target PDSCH is a PDSCH with a smallest or largest CORESET index among scheduling PDCCHs of all latest PDSCHs that carry a timing advance value for the first cell and that are at least a second time length later than the first signal in time domain, the second PDCCH is a PDCCH used for scheduling the target PDSCH, and the second time length is predefined, or is configurable, or is related to a capability of the first node device.

As one embodiment, the technical feature of "the second PDCCH is used for responding to the first signal" comprises the following meaning: the second PDCCH is at least a third time length later than the first signal in time domain, a PDSCH scheduled by the second PDCCH is an earliest PDSCH carrying a timing advance value for the first cell, and the third time length is predefined, or is configurable, or is related to a capability of the first node device.

As one embodiment, the technical feature of "the second PDCCH is used for responding to the first signal" comprises the following meaning: the second PDCCH is at least a third time length later than the first signal in time domain, a PDSCH scheduled by the second PDCCH is a latest PDSCH carrying a timing advance value for the first cell, and the third time length is predefined, or is configurable, or is related to a capability of the first node device.

As one embodiment, the technical feature of "the second PDCCH is used for responding to the first signal" comprises the following meaning: the second PDCCH is at least a third time length later than the first signal in time domain, the second PDCCH is a PDCCH with a smallest or largest CORESET index among all scheduling PDCCHs of at least one earliest PDSCH that carries a timing advance value for the first cell, and the third time length is predefined, or is configurable, or is related to a capability of the first node device.

As one embodiment, the technical feature of "the second PDCCH is used for responding to the first signal" comprises the following meaning: the second PDCCH is at least a third time length later than the first signal in time domain, the second PDCCH is a PDCCH with a smallest or largest CORESET index among all scheduling PDCCHs of at least one latest PDSCH that carries a timing advance value for the first cell, and the third time length is predefined, is configurable, or is related to a capability of the first node device.

As one embodiment, the first feedback information block comprises at least one information bit.

As one embodiment, the first feedback information block comprises at least one coded bit.

As one embodiment, the first feedback information block comprises an HARQ-ACK (Hybrid Automatic Repeat Request-Acknowledgement) bit.

As one embodiment, the first feedback information block comprises a UCI (Uplink Control Information) bit.

As one embodiment, the first feedback information block comprises physical layer information.

As one embodiment, the first feedback information block comprises MAC-layer information.

As one embodiment, the first feedback information block comprises an MAC CE (control element).

As one embodiment, the first feedback information block comprises an MAC header.

As one embodiment, the first feedback information block comprises an MAC payload.

As one embodiment, the first feedback information block is transported on a PUSCH (physical uplink shared channel).

As one embodiment, the first feedback information block is transported on a PUCCH (physical uplink control channel).

As one embodiment, the technical feature of "the first signal is associated with the first cell" comprises the following meaning: the first signal is used for the first cell.

As one embodiment, the technical feature of "the first signal is associated with the first cell" comprises the following meaning: the first signal is used for obtaining a timing advance (TA) for the first cell.

As one embodiment, the technical feature of "the first signal is associated with the first cell" comprises the following meaning: the first signal is associated with an index value with which the first cell is associated.

As one embodiment, the technical feature of "the first signal is associated with the first cell" comprises the following meaning: the first signal is configured for the first cell or for a cell group comprising the first cell.

As one embodiment, the technical feature of "the first signal is associated with the first cell" comprises the following meaning: a target recipient of the first signal is a network device of the first cell.

As one embodiment, the technical feature of "the first signal is associated with the first cell" comprises the following meaning: a time-frequency resource and/or sequence occupied by the first signal is configured for the first cell.

As one embodiment, the technical feature of "the first signal is associated with the first cell" comprises the following meaning: a time-frequency resource and/or sequence occupied by the first signal is configured together with an index value with which the first cell is associated.

As one embodiment, the technical feature of "the first signal is associated with the first cell" comprises the following meaning: a time-frequency resource and/or sequence occupied by the first signal and an index value with which the first cell is associated are configured or indicated in a same PDCCH order.

As one embodiment, the technical feature of "the first signal is associated with the first cell" comprises the following meaning: a transmission timing of the first signal is based on a downlink timing of the first cell.

As one embodiment, the technical feature of "the first signal is associated with the first cell" comprises the following meaning: a timing advance value of the first signal is a timing advance value for a downlink frame of the first cell.

As one embodiment, the technical feature of "the first signal is associated with the first cell" comprises the following meaning: a timing advance value of the first signal for a downlink frame of the first cell is equal to 0.

As one embodiment, the technical feature of "the first signal is associated with the first cell" comprises the following meaning: $N_{TA}$ of the first signal for a downlink frame of the first cell is equal to 0.

As one embodiment, the technical feature of "the first signal is associated with the first cell" comprises the following meaning: $N_{TA}$ of the first signal for a downlink frame with a same frame number of the first cell in an uplink frame to which the first signal belongs in time domain is equal to 0.

As one embodiment, an association relationship between the first signal and the first cell is pre-configured or predefined.

As one embodiment, the first PDCCH is used for explicitly or implicitly indicating an association relationship between the first signal and the first cell.

As one embodiment, one cell to which a signal or channel belongs refers to: a cell that transports the signal or channel.

As one embodiment, one cell to which a signal or channel belongs refers to: a cell to which a resource occupied by the signal or channel belongs.

As one embodiment, one cell to which a signal or channel belongs refers to: a cell in which transport of the signal or channel happens.

As one embodiment, one cell to which a signal or channel belongs refers to: a cell used for allocating a resource of the signal or channel.

As one embodiment, one cell to which a signal or channel belongs refers to: a cell identified by a cell identifier used for determining an initial value of a scrambling code of the signal or channel.

As one embodiment, one cell to which a signal or channel belongs refers to: a cell with which transport of the signal or channel is synchronized.

As one embodiment, one cell to which a signal or channel belongs refers to: a cell to which an RRC connection is established during transport of the signal or channel.

As one embodiment, the first cell is a non-serving cell of the first node device.

As one embodiment, the first cell is a serving cell of the first node device.

As one embodiment, the first PDCCH is used for indicating the first cell.

As one embodiment, the first cell is one of a plurality of cells indicated (or provided) by higher-layer signaling or a higher-layer parameter, and the first PDCCH is used for indicating the first cell from the plurality of cells.

As one embodiment, the first cell is one of a plurality of cells indicated (or provided) by higher-layer signaling or a higher-layer parameter, and the first PDCCH is used for indicating an index or ranking of the first cell among the plurality of cells.

As one embodiment, higher-layer signaling or a higher-layer parameter is used for indicating (or providing) a plurality of cells and a plurality of PRACH configurations, the first cell is one of the plurality of cells, a time-frequency resource and/or sequence occupied by the first signal belong/belongs to a time-frequency resource and/or sequence indicated (or provided) by one of the plurality of PRACH configurations, the first PDCCH is used for indicating the first cell from the plurality of cells, and the first PDCCH is used for indicating, from the plurality of PRACH configurations, the PRACH configuration that comprises the time-frequency resource and/or sequence occupied by the first signal.

As one embodiment, the technical feature of "the first cell is a cell other than the cell to which the first PDCCH belongs" comprises the following meaning: the first cell and the cell to which the first PDCCH belongs are different.

As one embodiment, the technical feature of "the first cell is a cell other than the cell to which the first PDCCH belongs" comprises the following meaning: the first cell is a non-serving cell.

As one embodiment, the technical feature of "the first cell is a cell other than the cell to which the first PDCCH belongs" comprises the following meaning: the first cell is a secondary cell (Scell).

As one embodiment, the technical feature of "the first cell is a cell other than the cell to which the first PDCCH belongs" comprises the following meaning: the first cell is a non-serving cell or the first cell is a secondary cell (Scell).

As one embodiment, the technical feature of "the first cell is a cell other than the cell to which the first PDCCH belongs" comprises the following meaning: the first cell is a destination cell for handover.

As one embodiment, the technical feature of "the first cell is a cell other than the cell to which the first PDCCH belongs" comprises the following meaning: the first cell is a candidate of a destination cell for handover.

As one embodiment, the technical feature of "the first cell is a cell other than the cell to which the first PDCCH belongs" comprises the following meaning: the first cell is a destination cell in which handover may happen.

As one embodiment, the technical feature of "the first cell is a cell other than the cell to which the first PDCCH belongs" comprises the following meaning: the first cell is a destination cell for configured LTM.

As one embodiment, the technical feature of "the first cell is a cell other than the cell to which the first PDCCH belongs" comprises the following meaning: the first cell is a destination cell for LTM indicated by an MAC CE.

As one embodiment, the technical feature of "the first cell is a cell other than the cell to which the first PDCCH belongs" comprises the following meaning: the first cell is a candidate of a destination cell for LTM.

As one embodiment, the technical feature of "the first cell is a cell other than the cell to which the first PDCCH belongs" comprises the following meaning: the first cell is a secondary cell or a non-serving cell that is expected to become a special cell.

As one embodiment, the technical feature of "the first cell is a cell other than the cell to which the first PDCCH belongs" comprises the following meaning: the first cell is a secondary cell or a non-serving cell that may become a special cell.

As one embodiment, the technical feature of "the first cell is a cell other than the cell to which the first PDCCH belongs" comprises the following meaning: the first cell is a secondary cell or a non-serving cell that is configured as a special cell.

As one embodiment, the target information block comprises high-layer information.

As one embodiment, the target information block comprises physical layer information.

As one embodiment, the target information block comprises MAC-layer information.

As one embodiment, the target information block comprises at least one bit.

As one embodiment, the target information block comprises at least one information bit.

As one embodiment, the target information block comprises at least one coded bit.

As one embodiment, the target information block comprises at least one transport block (TB, transport block).

As one embodiment, the target information block comprises at least one MAC PDU (Protocol Data Unit).

As one embodiment, the target information block comprises at least one DL-SCH (downlink shared channel).

As one embodiment, the target information block comprises at least one MAC SDU (Serve Data Unit).

As one embodiment, the target information block comprises at least one DCI bit.

As one embodiment, the target information block comprises all or part of fields in at least one DCI format.

As one embodiment, the target information block comprises at least one codeword.

As one embodiment, the target information block comprises at least one CCCH.

As one embodiment, the target information block comprises a CRC bit.

As one embodiment, the target information block does not comprise a CRC bit.

As one embodiment, the technical feature of "the second PDCCH is used for determining a target information block" comprises the following meaning: the second PDCCH carries the target information block.

As one embodiment, the technical feature of "the second PDCCH is used for determining a target information block" comprises the following meaning: the target information block is transported on the second PDCCH.

As one embodiment, the technical feature of "the second PDCCH is used for determining a target information block" comprises the following meaning: the target information block comprises all or part of fields in a DCI format transported on the second PDCCH.

As one embodiment, the technical feature of "the second PDCCH is used for determining a target information block" comprises the following meaning: the target information block is mapped to the second PDCCH.

As one embodiment, the technical feature of "the second PDCCH is used for determining a target information block" comprises the following meaning: the second PDCCH is used for decoding of the target information block.

As one embodiment, the technical feature of "the second PDCCH is used for determining a target information block" comprises the following meaning: the second PDCCH is used for scheduling a PDSCH carrying the target information block.

As one embodiment, the technical feature of "the second PDCCH is used for determining a target information block" comprises the following meaning: a DCI format transported on the second PDCCH is used for scheduling a PDSCH carrying the target information block.

As one embodiment, the technical feature of "the second PDCCH is used for determining a target information block" comprises the following meaning: a DCI format used for generating the second PDCCH is used for scheduling a PDSCH carrying the target information block.

As one embodiment, the technical feature of "the second PDCCH is used for determining a target information block" comprises the following meaning: the second PDCCH is used for scheduling a PDSCH to which the target information block is mapped.

As one embodiment, the technical feature of "the second PDCCH is used for determining a target information block" comprises the following meaning: the second PDCCH is used for scheduling a PDSCH used for transporting the target information block.

As one embodiment, the technical feature of "the second PDCCH is used for determining a target information block" comprises the following meaning: the target information block is transported on a target PDSCH, and the second PDCCH is used for scheduling the target PDSCH.

As one embodiment, the technical feature of "the second PDCCH is used for determining a target information block" comprises the following meaning: a DCI format carried by the second PDCCH is used for determining a time-frequency resource used for transporting the target information block.

As one embodiment, the technical feature of "the second PDCCH is used for determining a target information block" comprises the following meaning: a DCI format carried by the second PDCCH is used for determining a time-frequency resource occupied and/or a modulation coding scheme (MCS) employed by a channel or signal carrying the target information block.

As one embodiment, the technical feature of "the second PDCCH is used for determining a target information block" comprises the following meaning: the second PDCCH is used by the first node device in the present application for determining the target information block.

As one embodiment, the technical feature of "the second PDCCH is used for determining a target information block" comprises the following meaning: a DCI format carried by the second PDCCH is used for explicitly or implicitly indicating a quantity of bits included in the target information block.

As one embodiment, the technical feature of "the second PDCCH is used for determining a target information block" comprises the following meaning: a DCI format carried by the second PDCCH is used for explicitly or implicitly indicating a bit value of at least one bit included in the target information block.

As one embodiment, the timing advance value for the first cell is an absolute timing advance value (TA) for the first cell.

As one embodiment, the timing advance value for the first cell is a relative timing advance value (TA) for the first cell.

As one embodiment, the timing advance value for the first cell is a timing advance value between an uplink timing and a downlink timing in the first cell.

As one embodiment, the timing advance value for the first cell is a value of $T_{TA}$ in the first cell.

As one embodiment, the timing advance value for the first cell is a timing advance value after handover to the first cell.

As one embodiment, the timing advance value for the first cell is a time advance of an uplink frame in the first cell relative to a downlink frame of a same frame number.

As one embodiment, the technical feature of "the target information block is used for determining a timing advance value for the first cell" comprises the following meaning: the target information block is used by the first node device in the present application for determining the timing advance value for the first cell.

As one embodiment, the technical feature of "the target information block is used for determining a timing advance value for the first cell" comprises the following meaning: all or part of the target information block is used for explicitly or implicitly indicating the timing advance value for the first cell.

As one embodiment, the technical feature of "the target information block is used for determining a timing advance value for the first cell" comprises the following meaning: all or part of the target information block is used for explicitly or implicitly indicating a value of at least one component of the timing advance value for the first cell.

As one embodiment, the technical feature of "the target information block is used for determining a timing advance value for the first cell" comprises the following meaning: all or part of the target information block is used for explicitly or implicitly indicating a value of at least one parameter included in the timing advance value for the first cell.

As one embodiment, the technical feature of "the target information block is used for determining a timing advance value for the first cell" comprises the following meaning: all or part of the target information block is used for explicitly or implicitly indicating a value of $N_{TA}$ for the first cell.

As one embodiment, the technical feature of "the target information block is used for determining a timing advance value for the first cell" comprises the following meaning: all or part of the target information block is used for explicitly or implicitly indicating a value of $N_{TA} \cdot T_c$ for the first cell.

As one embodiment, the technical feature of "the target information block is used for determining a timing advance value for the first cell" comprises the following meaning: all or part of the target information block is used for explicitly or implicitly indicating a value of $T_{TA}$ for the first cell.

As one embodiment, the technical feature of "the target information block is used for determining a timing advance value for the first cell" comprises the following meaning: all or part of the target information block is used for explicitly or implicitly indicating a value of $N_{TA}$ and/or $T_c$ and/or $N_{TA,offset}$ for the first cell.

As one embodiment, the technical feature of "the target information block is used for determining a timing advance value for the first cell" comprises the following meaning: an MAC CE and/or an MAC header and/or an MAC payload included in the target information block are/is used for explicitly or implicitly indicating the timing advance value for the first cell.

As one embodiment, the technical feature of "the target information block is used for determining a timing advance value for the first cell" comprises the following meaning: at least one information bit included in the target information block is used for explicitly or implicitly indicating the timing advance value for the first cell.

As one embodiment, the technical feature of "the target information block is used for determining a timing advance value for the first cell" comprises the following meaning: at least one field included in the target information block is used for explicitly or implicitly indicating the timing advance value for the first cell.

As one embodiment, the technical feature of "the target information block is used for determining a timing advance value for the first cell" comprises the following meaning: the target information block is used for calculating the timing advance value for the first cell.

As one embodiment, the technical feature of "the first feedback information block is used for indicating whether the target information block is valid" comprises the following meaning: the first feedback information block is used by the first node device in the present application for indicating whether the target information block is valid.

As one embodiment, the technical feature of "the first feedback information block is used for indicating whether the target information block is valid" comprises the following meaning: all or part of the first feedback information block is used for explicitly or implicitly indicating whether the target information block is valid.

As one embodiment, the technical feature of "the first feedback information block is used for indicating whether the target information block is valid" comprises the following meaning: all or part of the first feedback information block is used for explicitly or implicitly indicating whether the target information block is correctly decoded.

As one embodiment, the technical feature of "the first feedback information block is used for indicating whether the target information block is valid" comprises the following meaning: all or part of the first feedback information block is used for explicitly or implicitly indicating whether a transport block comprising the target information block is correctly decoded.

As one embodiment, the technical feature of "the first feedback information block is used for indicating whether the target information block is valid" comprises the following meaning: all or part of the first feedback information block is used for explicitly or implicitly indicating whether the second PDCCH is detected or whether the second PDCCH is correctly decoded.

As one embodiment, the technical feature of "the first feedback information block is used for indicating whether the target information block is valid" comprises the following meaning: all or part of the first feedback information block is used for explicitly or implicitly indicating whether CRC check comprising the target information block is passed.

As one embodiment, the technical feature of "the first feedback information block is used for indicating whether the target information block is valid" comprises the following meaning: the first feedback information block is used for indicating whether a PRACH (or preamble) for the first cell needs to be retransmitted.

As one embodiment, the technical feature of "the first feedback information block is used for indicating whether the target information block is valid" comprises the following meaning: the first feedback information block is used for indicating whether a new PDCCH order for the first cell is needed.

As one embodiment, the technical feature of "the first feedback information block is used for indicating whether the target information block is valid" comprises the following meaning: the first feedback information block is used for indicating whether the timing advance value for the first cell needs to be updated.

As one embodiment, the technical feature of "the first feedback information block is used for indicating whether the target information block is valid" comprises the following meaning: the first feedback information block comprises a request for a PRACH (or preamble) for the first cell.

As one embodiment, the technical feature of "the first feedback information block is used for indicating whether the target information block is valid" comprises the following meaning: the first feedback information block comprises a request for a PDCCH order for the first cell.

As one embodiment, the technical feature of "the first feedback information block is used for indicating whether the target information block is valid" comprises the following meaning: the first feedback information block comprises a request to update the timing advance value for the first cell.

As one embodiment, the technical feature of "the first feedback information block is used for indicating whether the target information block is valid" comprises the following meaning: the first feedback information is used for explicitly or implicitly indicating successful completion of cell switch.

As one embodiment, the technical feature of "the first feedback information block is used for indicating whether the target information block is valid" comprises the following meaning: the first feedback information is used for explicitly or implicitly indicating success of an LTM procedure.

As one embodiment, the technical feature of "the first feedback information block is used for indicating whether the target information block is valid" comprises the following meaning: the first feedback information is used for explicitly or implicitly indicating completion of an LTM procedure.

As one embodiment, the first feedback information is transmitted on the cell to which the first PDCCH belongs.

As one embodiment, the first feedback information is transmitted on a source cell of handover.

As one embodiment, the first feedback information is transmitted on a destination cell of handover.

As one embodiment, the first feedback information is transmitted on a source cell of LTM.

As one embodiment, the first feedback information is transmitted on a destination cell of LTM.

As one embodiment, the first feedback information is transmitted on the first cell.

As one embodiment, the second PDCCH is used for indicating the cell switch to the first cell, and the first feedback information is used for indicating successful completion of the cell switch.

As one embodiment, the capability of the first node device is used for indicating support for transmitting the first feedback information block.

As one embodiment, the capability of the first node device is used for indicating support for LTM.

As one embodiment, the capability of the first node device is used for indicating support for reception of the second PDCCH in LTM.

## Embodiment 2

Embodiment 2 illustrates a schematic diagram of one network architecture according to the present application, as shown in FIG. 2. FIG. 2 illustrates a diagram of a network architecture 200 of a 5G NR, LTE (Long-Term Evolution), and LTE-A (Long-Term Evolution Advanced) system. The 5G NR or LTE network architecture 200 may be referred to as a 5GS (5G System)/EPS (Evolved Packet System) 200 or some other suitable terminologies. The 5GS/EPS 200 may include one or more pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with another access network. However, these entities/interfaces are not shown for simplicity. As shown in the figure, the 5GS/EPS provides a packet switching service. However, those skilled in the art will readily understand that various concepts presented throughout the present application can be extended to a network that provides a circuit switching service or another cellular network. The NG-RAN comprises an NR/Evolved Node B (gNB/eNB) 203 and other gNB (eNB) 204. The gNB(eNB)203 provides user and control plane protocol termination towards the UE201. The gNB(eNB)203 may be connected to the other gNB (eNB) 204 via an Xn/X2 interface (for example, backhaul). The gNB(eNB)203 may also be referred to as a base station, a base transceiver station, a radio base station, a radio transceiver, a transceiver function, a basic service set (BSS), an extended service set (ESS), a TRP (transmitter receiver point), or some other suitable terminologies. The gNB(eNB)203 provides an access point to the 5GC/EPC210 for the UE201. Examples of the UE201 include a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB(eNB)203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that handles signaling between the UE201 and the 5GC/EPC210. Generally, the MME/AMF/SMF211 provides bearer and connection management. All user IP (Internet Protocol) packets are transported through the S-GW/UPF212, and the S-GW/UPF212 is itself connected to the P-GW/UPF213. The P-GW provides UE IP address allocation and another function. The P-GW/UPF213 is connected to the Internet service 230. The Internet service 230 comprises an operator-corresponding Internet protocol service, which may specifically include Internet, intranet, IMS (IP Multimedia Subsystem) and packet switching streaming services.

As one embodiment, the UE201 corresponds to the first node device in the present application.

As one embodiment, the gNB(eNB)201 corresponds to the second node device in the present application.

## Embodiment 3

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture of the control plane 300 for a first node device (a UE or a gNB) and a second node device (a gNB or UE) using three layers: a layer 1, a layer 2, and a layer 3. The layer 1 (L1 layer) is the lowest layer and implements various PHY (physical layer) signal processing functions. The L1 layer will be referred to as a PHY301 herein. The layer 2 (L2 layer) 305 is above the PHY301 and is responsible for a link between the first node device and the second node device through the PHY301. The L2 layer 305 comprises an MAC (Medium Access Control) sublayer 302, an RLC (Radio Link Control) sublayer 303, and a PDCP (Packet Data Convergence Protocol) sublayer 304, and these sublayers terminate at the second node device. The PDCP sublayer 304 provides multiplexing between different radio bearers and logical channels. The PDCP sublayer 304 further provides security by encrypting a data packet, and provides handover support for the first node device between the second node devices. The RLC sublayer 303 provides segmentation and reassembly of an upper-layer data packet, retransmission of a lost data packet, and reordering of a data packet to compensate for out-of-order reception due to an HARQ. The MAC sublayer 302 provides multiplexing between logical and transport channels. The MAC sublayer 302 is further responsible for allocating various radio resources (for example, resource blocks) in one cell between the first node devices. The MAC sublayer 302 is further responsible for HARQ operations. An RRC (Radio Resource Control) sublayer 306 in the layer 3 (L3 layer) in the control plane 300 is responsible for obtaining a radio resource (namely, a radio bearer) and configuring a lower layer by using RRC signaling between the second node device and the first node device. The radio protocol architecture for the user plane 350 comprises the layer 1 (L1 layer) and the layer 2 (L2 layer). The radio protocol architecture for the first node device and the second node device in the user plane 350 is substantially the same as that for corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 further provides header compression for an upper-layer data packet to reduce radio transmission overheads. The L2 layer 355 in the user plane 350 further comprises an SDAP (Service Data Adaptation Protocol) sublayer 356, and the SDAP sublayer 356 is responsible for mapping between a QoS stream and a data radio bearer (DRB, Data Radio Bearer) to support diversity of services. Although not shown in the figure, the first node device may have several upper layers above the L2 layer 355, comprising a network layer (for example, an IP layer) terminating at a P-GW on a network side and an application layer terminating at another end (for example, a remote UE and a server) of the connection.

As one embodiment, the wireless protocol architecture in FIG. 3 is applicable to the first node device in the present application.

As one embodiment, the wireless protocol architecture in FIG. 3 is applicable to the second node device in the present application.

## Embodiment 4

Embodiment 4 shows a schematic diagram of a first node device and a second node device according to one embodiment of the present application, as shown in FIG. 4.

A first node device (450) may include a controller/processor 490, a data source/cache 480, a receiving processor 452, a transmitting device/receiving device 456, and a transmitting processor 455, and the transmitting device/receiving device 456 comprises an antenna 460.

The second node device (410) may include a controller/processor 440, a data source/cache 430, a receiving processor 412, a transmitting device/receiving device 416, and a transmitting processor 415, and the transmitting device/receiving device 416 comprises an antenna 420.

In a DL (Downlink), an upper-layer packet, for example, high-layer information included in a first information block in the present application is provided to the controller/processor 440. The controller/processor 440 implements functions of an L2 layer and layers above it. In the DL, the controller/processor 440 provides packet header compression, encryption, packet segmentation and reordering, multiplexing between logical and transport channels, and radio resource allocation to the first node device 450 based on various priority metrics. The controller/processor 440 is further responsible for HARQ operations, retransmission of a lost packet, and signaling to the first node device 450, for example, high-layer information included in the first information block in the present application is generated in the controller/processor 440. The transmitting processor 415 implements various signal processing functions for an L1 layer (namely, a physical layer), comprising coding, interleaving, scrambling, modulation, power control/allocation, precoding, and physical layer control signaling generation, and the like. For example, generation of a physical layer signal carrying the first information block in the present application, a physical layer signal corresponding to a first PDCCH, and a physical layer signal corresponding to a second PDCCH is completed at the transmitting processor 415. Generated modulation symbols are divided into parallel streams, and each stream is mapped to a corresponding multi-carrier sub-carrier and/or multi-carrier symbol, which is then mapped to the antenna 420 by the transmitting processor 415 via the transmitting device 416 to be transmitted in a form of a radio frequency signal. At a receiving end, each receiving device 456 receives the radio frequency signal through a corresponding antenna 460 of the receiving device, and each receiving device 456 recovers baseband information modulated onto a radio frequency carrier and provides the baseband information to the receiving processor 452. The receiving processor 452 implements various signal reception processing functions of the L1 layer. The signal reception and processing functions include reception of the physical layer signal of the first information block, the first PDCCH, and the second PDCCH in the present application, demodulation based on various modulation schemes (for example, binary phase shift keying (BPSK) and quadrature phase shift keying (QPSK)) through multi-carrier symbols in a multi-carrier symbol stream, followed by descrambling, decoding, and deinterleaving to recover data or control transmitted by the second node device 410 on a physical channel, and then providing the data and control signals to the controller/processor 490. The controller/processor 490 is responsible for the L2 layer and layers above it, and the controller/processor 490 interprets the high-layer information included in the first information block in the present application. The controller/processor may be associated with a memory 480 storing a program code and data. The memory 480 may be referred to as a computer-readable medium.

In uplink (UL) transport, similar to downlink transport, high-layer information comprising high-layer information included in the first feedback information block in the present application (provided that the first feedback information block comprises the high-layer information) is generated at the controller/processor 490 and then is implemented by the transmitting processor 455 for various signal transmission processing functions for the L1 layer (namely, the physical layer), generation comprising a physical layer signal carrying the first feedback information block and a first signal is completed at the transmitting processor 455, and then the physical layer signal and the first signal are mapped to the antenna 460 by the transmitting processor 455 via the transmitting device 456 and are transmitted in a form of a radio frequency signal. The receiving device 416 receives a radio frequency signal through its corresponding antenna 420, and each receiving device 416 recovers baseband information modulated on a radio frequency carrier and provides the baseband information to the receiving processor 412. The receiving processor 412 implements various signal receiving processing functions for the L1 layer (namely, the physical layer), comprising receiving and processing a physical layer signal carrying the first feedback information block and the first signal, and then providing data and/or a control signal to the controller/processor 440. Functions of the L2 layer implemented at the controller/processor 440 include interpreting high-layer information, comprising interpretation of high-layer information included in the first feedback information block (provided that the first feedback information block comprises the high-layer information). The controller/processor may be associated with a cache 430 storing a program code and data. The cache 430 may be a computer-readable medium.

As one embodiment, the first node device 450 apparatus comprises: at least one processor and at least one memory, wherein the at least one memory comprises a computer program code; and the at least one memory and the computer program code are configured to be used together with the at least one processor, and the first node device 450 apparatus at least: receives a first PDCCH; and transmits a first signal, wherein the first PDCCH is used for triggering transmission of the first signal, and the first signal carries a random access preamble sequence; receives a second PDCCH, wherein the second PDCCH is used for responding to the first signal; and transmits a first feedback information block, wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

As one embodiment, the first node device 450 apparatus comprises: a memory storing a computer-readable instruction program, wherein the computer-readable instruction program generates an action when being executed by at least one processor, and the action comprises: receiving a first PDCCH; transmitting a first signal, wherein the first PDCCH is used for triggering transmission of the first signal, and the first signal carries a random access preamble sequence; receiving a second PDCCH, wherein the second PDCCH is used for responding to the first signal; and transmitting a first feedback information block, wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

As one embodiment, the second node device 410 apparatus comprises: at least one processor and at least one memory, wherein the at least one memory comprises computer program code; and the at least one memory and the computer program code are configured to be used together with the at least one processor. The second node device 410 apparatus at least: transmits a first PDCCH; receives a first signal, wherein the first PDCCH is used for triggering transmission of the first signal, and the first signal carries a random access preamble sequence; transmits a second PDCCH, wherein the second PDCCH is used for responding to the first signal; and receives a first feedback information block, wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

As one embodiment, the second node device 410 comprises: a memory storing a computer-readable instruction program, wherein the computer-readable instruction program generates an action when being executed by at least one processor, and the action comprises: transmitting a first PDCCH; receiving a first signal, wherein the first PDCCH is used for triggering transmission of the first signal, and the first signal carries a random access preamble sequence; transmitting a second PDCCH, wherein the second PDCCH is used for responding to the first signal; and receiving a first feedback information block, wherein the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

As one embodiment, the first node device 450 is one piece of user equipment (UE).

As one embodiment, the second node device 410 is one base station device (gNB/eNB).

As one embodiment, a receiving device 456 (comprising an antenna 460) and a receiving processor 452 are used for receiving the first PDCCH in the present application.

As one embodiment, a transmitting device 456 (comprising an antenna 460) and a transmitting processor 455 are used for transmitting the first signal in the present application.

As one embodiment, a receiving device 456 (comprising an antenna 460) and a receiving processor 452 are used for receiving the second PDCCH in the present application.

As one embodiment, a transmitting device 456 (comprising an antenna 460), a transmitting processor 455, and a controller/processor 490 are used for transmitting the first feedback information block in the present application.

As one embodiment, a receiving device 456 (comprising an antenna 460), a receiving processor 452, and a controller/processor 490 are used for receiving the first information block in the present application.

As one embodiment, a transmitting device 416 (comprising an antenna 420) and a transmitting processor 415 are used for transmitting the first PDCCH in the present application.

As one embodiment, a receiving device 416 (comprising an antenna 420) and a receiving processor 412 are used for receiving the first signal in the present application.

As one embodiment, a transmitting device 416 (comprising an antenna 420) and a transmitting processor 415 are used for transmitting the second PDCCH in the present application.

As one embodiment, a receiving device 416 (comprising an antenna 420), a receiving processor 412, and a controller/processor 440 are used for receiving the first feedback information block in the present application.

As one embodiment, a transmitting device 416 (comprising an antenna 420), a transmitting processor 415, and a controller/processor 440 are used for transmitting the first information block in the present application.

### Embodiment 5

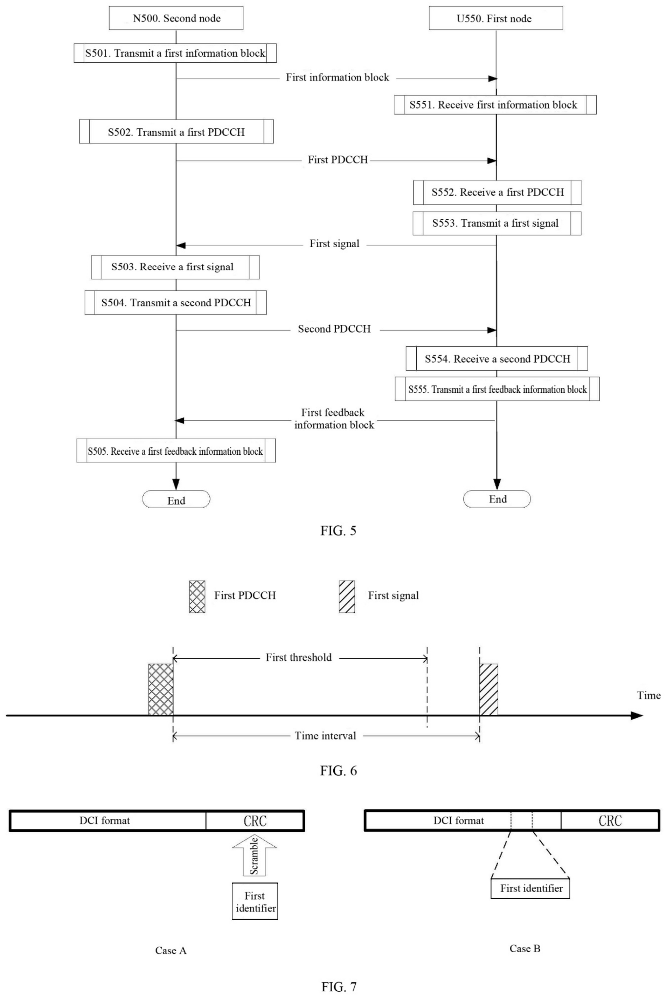

Embodiment 5 illustrates a flowchart of wireless signal transport according to one embodiment of the present application, as shown in FIG. 5. In FIG. 5, a second node device N500 is a maintenance base station of a serving cell of a first node device U550. It is particularly noted that an order in this example does not limit a signal transport order and an implementation order in the present application.

For **the second node device N500,** a first information block is transmitted in step S501, a first PDCCH is transmitted in step S502, a first signal is received in step S503, a second PDCCH is transmitted in step S504, and a first feedback information block is received in step S505.

For **the first node device U550,** a first information block is received in step S551, a first PDCCH is received in step S552, a first signal is transmitted in step S553, a second PDCCH is received in step S554, and a first feedback information block is transmitted in step S555.

In Embodiment 5, the first PDCCH is used for triggering transmission of the first signal, and the first signal carries a random access preamble sequence; the second PDCCH is used for responding to the first signal; the first signal is associated with a first cell, and the first cell is a cell other than a cell to which the first PDCCH belongs; the second PDCCH is used for determining a target information block, the target information block is used for determining a timing advance value for the first cell, and the first feedback information block is used for indicating whether the target information block is valid; and the first information block is used for determining a power ramping step, the first PDCCH is used for determining a first count value, and the power ramping step and the first count value are used together for determining a transmit power value of the first signal.

As one embodiment, the first information block is transported through an air interface or a wireless interface.

As one embodiment, the first information block comprises all or part of one piece of high-layer signaling or one piece of physical layer signaling.

As one embodiment, the first information block comprises all or part of one piece of RRC (Radio Resource Control) layer signaling, or the first information block comprises all or part of one piece of MAC (Medium Access Control) layer signaling.

As one embodiment, the first information block comprises all or part of one system information block (SIB).

As one embodiment, the first information block comprises all or part of one SIB1.

As one embodiment, the first information block is user equipment-specific (UE-specific), or the first information block is cell-specific.

As one embodiment, the first information block is for the first cell.

As one embodiment, the first information block is for the cell to which the first PDCCH belongs.

As one embodiment, the first information block is for the cell other than the cell to which the first PDCCH belongs.

As one embodiment, the first information block is per cell.

As one embodiment, the first information block is per cell group or per cell list.

As one embodiment, the first information block is configured per carrier, or the first information block is configured per BWP (bandwidth part), or the first information block is configured per band or per frequency range (FR).

As one embodiment, the first information block comprises all or part of fields in a DCI (Downlink Control Information) format.

As one embodiment, the first information block comprises a field "powerRampingStep"; or the first information block comprises all or part of an IE "RACH-ConfigGeneric"; or the first information block comprises all or part of an IE "RACH-ConfigDedicated"; or the first information block comprises all or part of an IE "RACH-ConfigCommon"; or the first information block comprises all or part of an IE "SpCellConfig"; or the first information block comprises all or part of an IE "BWP-UplinkCommon"; or the first information block comprises all or part of an IE "BWP-Uplink"; or the first information block comprises all or part of an IE "ServingCellConfig"; or the first information block comprises all or part of an IE "CellGroupConfig"; or the first information block comprises all or part of an IE "LTMConfig"; or the first information block comprises all or part of an IE "LTMConfig-r18"; or the first information block comprises all or part of an IE "L1L2Trigger-MobilityConfig".

As one embodiment, the first information block is an IE other than an IE configured with a random access channel.

As one embodiment, the first information block is an IE other than the IE "RACH-ConfigDedicated" or the IE "RACH-ConfigCommon".

As one embodiment, the first information block comprises all or part of random access configuration information.

As one embodiment, the first information block comprises all or part of LTM configuration information.

### Embodiment 6

Embodiment 6 illustrates a schematic diagram of a relationship between a first PDCCH and a first signal according to one embodiment of the present application, as shown in FIG. 6. In FIG. 6, the horizontal axis represents time,

EP 4 683 422 A1

the rectangle filled with cross lines represents the first PDCCH, and the rectangle filled with diagonal lines represents the first signal.

In Embodiment 6, a time interval length between the first PDCCH in the present application and the first signal in the present application in time domain is not less than a first threshold. A relationship between both of the first cell and the cell to which the first PDCCH belongs in the present application is used for determining the first threshold.

As one embodiment, the first threshold being associated with the relationship between both of the first cell and the cell to which the first PDCCH belongs considers different latency requirements in different scenarios and reduces product implementation complexity.

As one embodiment, a latest symbol of reception of the first PDCCH is not later than an earliest symbol of transport of the first signal.

As one embodiment, a latest symbol of reception of the first PDCCH is earlier than an earliest symbol of transport of the first signal.

As one embodiment, the time interval length between the first PDCCH and the first signal in time domain is a time interval length between a latest symbol of reception of the first PDCCH and an earliest symbol of transport of the first signal.

As one embodiment, the time interval length between the first PDCCH and the first signal in time domain is a time domain delay between the first PDCCH and the first signal.

As one embodiment, the time interval length between the first PDCCH and the first signal in time domain is a time interval length between an end moment of a latest symbol of reception of the first PDCCH and a start moment of an earliest symbol of transport of the first signal.

As one embodiment, the time interval length between the first PDCCH and the first signal in time domain is a time interval length between a start moment of a latest symbol of reception of the first PDCCH and a start moment of an earliest symbol of transport of the first signal.

As one embodiment, the time interval length between the first PDCCH and the first signal in time domain is a time interval length between an end moment of a latest symbol of reception of the first PDCCH and an end moment of an earliest symbol of transport of the first signal.

As one embodiment, a unit of the time interval length between the first PDCCH and the first signal in time domain is millisecond (ms).

As one embodiment, the time interval length between the first PDCCH and the first signal in time domain is expressed in terms of a quantity of symbols.

As one embodiment, the time interval length between the first PDCCH and the first signal in time domain is expressed in terms of absolute time.

As one embodiment, a unit of the first threshold is millisecond.

As one embodiment, the first threshold is expressed in terms of absolute time.

As one embodiment, the first threshold is expressed in terms of a quantity of symbols.

As one embodiment, the time interval length between the first PDCCH and the first signal in time domain is greater than or equal to the first threshold.

As one embodiment, the relationship between both of the first cell and the cell to which the first PDCCH belongs comprises: the first cell and the cell to which the first PDCCH belongs are the same.

As one embodiment, the relationship between both of the first cell and the cell to which the first PDCCH belongs comprises: whether the first cell and the cell to which the first PDCCH belongs belong to a same cell group (CG).

As one embodiment, the relationship between both of the first cell and the cell to which the first PDCCH belongs comprises: whether the first cell and the cell to which the first PDCCH belongs belong to a same timing advance group (TAG).

As one embodiment, the relationship between both of the first cell and the cell to which the first PDCCH belongs comprises: whether the first cell and the cell to which the first PDCCH belongs are intra-frequency or inter-frequency.

As one embodiment, the relationship between both of the first cell and the cell to which the first PDCCH belongs comprises: whether the first cell and the cell to which the first PDCCH belongs are both serving cells.

As one embodiment, the relationship between both of the first cell and the cell to which the first PDCCH belongs comprises: whether the first cell and the cell to which the first PDCCH belongs are both active cells.

As one embodiment, the relationship between both of the first cell and the cell to which the first PDCCH belongs comprises: whether the first cell and the cell to which the first PDCCH belongs are in a same frequency range (FR).

As one embodiment, the relationship between both of the first cell and the cell to which the first PDCCH belongs comprises: whether the first cell and the cell to which the first PDCCH belongs use a same duplex mode.

As one embodiment, "the cell to which the first PDCCH belongs" and "a special cell in which the first node device is located when receiving the first PDCCH" are equivalent or may be used interchangeably.

As one embodiment, "the cell to which the first PDCCH belongs" and "a cell with a CU (Centralized Unit) in which the first node device is located when receiving the first PDCCH" are equivalent or may be used interchangeably.

As one embodiment, "the cell to which the first PDCCH belongs" and "a cell with an RRC layer in which the first

19

node device is located when receiving the first PDCCH" are equivalent or may be used interchangeably.

As one embodiment, "the cell to which the first PDCCH belongs" and "a cell with a control plane in which the first node device is located when receiving the first PDCCH" are equivalent or may be used interchangeably.

As one embodiment, "the cell to which the first PDCCH belongs" and "a cell with an RRC connection in which the first node device is located when receiving the first PDCCH" are equivalent or may be used interchangeably.

As one embodiment, "the cell to which the first PDCCH belongs" and "a cell in which the first node device resides when receiving the first PDCCH" are equivalent or may be used interchangeably.

As one embodiment, "the cell to which the first PDCCH belongs" and "a source cell of LTM when the first PDCCH is received" are equivalent or may be used interchangeably.

As one embodiment, "the cell to which the first PDCCH belongs" and "a cell in which the first node device is located before handover" are equivalent or may be used interchangeably.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used by the first node device in the present application for determining the first threshold.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used when the first threshold is calculated.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used for determining a value of at least one component included in the first threshold.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used for determining a value of at least one parameter used when the first threshold is calculated.

As one embodiment, the technical feature of "the relationship between both of the first cell and the cell to which the first PDCCH belongs is used for determining the first threshold" comprises the following meaning: a target parameter value is used for determining the first threshold; when the relationship between both of the first cell and the cell to which the first PDCCH belongs is a first relationship, the target parameter value is equal to a first candidate value; and when the relationship between both of the first cell and the cell to which the first PDCCH belongs is a second relationship, the target parameter value is equal to a second candidate value.

- As one dependent embodiment of the above embodiment, the first candidate value and the second candidate value are not equal, the first candidate value is predefined, is configurable, or is related to a capability of the first node device, and the second candidate value is predefined, is configurable, or is related to the capability of the first node device.

- As one dependent embodiment of the above embodiment, "a target parameter value is used for determining the first threshold" comprises: the target parameter value is a value of one parameter used when the first threshold is calculated.

- As one dependent embodiment of the above embodiment, "a target parameter value is used for determining the first threshold" comprises: the first threshold and the target parameter value are linearly correlated.

- As one dependent embodiment of the above embodiment, the relationship between both of the first cell and the cell to which the first PDCCH belongs is only one of the first relationship or the second relationship.

- As one dependent embodiment of the above embodiment, the relationship between both of the first cell and the cell to which the first PDCCH belongs may alternatively be a relationship other than the first relationship or the second relationship.

- As one dependent embodiment of the above embodiment, the first relationship and the second relationship are not the same.

- As one dependent embodiment of the above embodiment, the first relationship: that the first cell and the cell to which the first PDCCH belongs are the same; and the second relationship means: the first cell and the cell to which the first PDCCH belongs are different.

- As one dependent embodiment of the above embodiment, the first relationship means: the first cell and the cell to which the first PDCCH belongs are a secondary cell and a primary cell, respectively; and the second relationship means: the first cell is a non-serving cell, and the cell to which the first PDCCH belongs is a serving cell.

- As one dependent embodiment of the above embodiment, the first relationship means: the first cell and the cell to which the first PDCCH belongs belong to a same TAG; and the second relationship means: the first cell and the cell to which the first PDCCH belongs belong to different TAGs.

- As one dependent embodiment of the above embodiment, the first relationship means: the first cell and the cell to which the first PDCCH belongs are different, and the first cell and the cell to which the first PDCCH belongs are intra-frequency; and the second relationship means: the first cell and the cell to which the first PDCCH belongs are different, and the first cell and the cell to which the first PDCCH belongs are inter-frequency.

- As one dependent embodiment of the above embodiment, the first relationship means: the first cell and the cell to which the first PDCCH belongs are different, and the first cell and the cell to which the first PDCCH belongs are in a same cell group; and the second relationship means: the first cell and the cell to which the first PDCCH belongs are different, and the first cell and the cell to which the first PDCCH belongs are in different cell groups.

- As one dependent embodiment of the above embodiment, the first relationship means: the first cell and the cell to which the first PDCCH belongs belong to a same cell group, and the first cell and the cell to which the first PDCCH belongs are a secondary cell and a primary cell, respectively; and the second relationship means: the first cell and the cell to which the first PDCCH belongs belong to a same cell group, and the first cell is a non-serving cell, while the cell to which the first PDCCH belongs is a serving cell.

- As one dependent embodiment of the above embodiment, the first relationship means: the first cell and the cell to which the first PDCCH belongs are different, and the first cell and the cell to which the first PDCCH belongs are in a same frequency range (FR); and the second relationship means: the first cell and the cell to which the first PDCCH belongs are different, and the first cell and the cell to which the first PDCCH belongs are in different frequency ranges.

As one embodiment, the technical feature of "the relationship between both of the first cell and the cell to which the first PDCCH belongs is used for determining the first threshold" comprises the following meaning: when the relationship between both of the first cell and the cell to which the first PDCCH belongs is a first relationship, the first threshold is equal to a first candidate value; and when the relationship between both of the first cell and the cell to which the first PDCCH belongs is a second relationship, the first threshold is equal to a sum (or a difference) between the first candidate value and a first offset value.

- As one dependent embodiment of the above embodiment, the first candidate value is predefined, is configurable, or is related to a capability of the first node device, and the first offset value is predefined, is configurable, or is related to the capability of the first node device.

- As one dependent embodiment of the above embodiment, the relationship between both of the first cell and the cell to which the first PDCCH belongs is only one of the first relationship or the second relationship.

- As one dependent embodiment of the above embodiment, the relationship between both of the first cell and the cell to which the first PDCCH belongs may alternatively be a relationship other than the first relationship or the second relationship.

- As one dependent embodiment of the above embodiment, the first relationship and the second relationship are not the same.

- As one dependent embodiment of the above embodiment, both the first relationship: that the first cell and the cell to which the first PDCCH belongs are the same; and the second relationship means: both of the first cell and the cell to which the first PDCCH belongs are different.

- As one dependent embodiment of the above embodiment, the first relationship means: the first cell and the cell to which the first PDCCH belongs are a secondary cell and a primary cell, respectively; and the second relationship means: the first cell is a non-serving cell, and the cell to which the first PDCCH belongs is a serving cell.

- As one dependent embodiment of the above embodiment, the first relationship means: the first cell and the cell to which the first PDCCH belongs belong to a same TAG; and the second relationship means: the first cell and the cell to which the first PDCCH belongs belong to different TAGs.

- As one dependent embodiment of the above embodiment, the first relationship means: the first cell and the cell to which the first PDCCH belongs are different, and the first cell and the cell to which the first PDCCH belongs are intra-frequency; and the second relationship means: the first cell and the cell to which the first PDCCH belongs are different, and the first cell and the cell to which the first PDCCH belongs are inter-frequency.

- As one dependent embodiment of the above embodiment, the first relationship means: the first cell and the cell to which the first PDCCH belongs are different, and the first cell and the cell to which the first PDCCH belongs are in a same cell group; and the second relationship means: the first cell and the cell to which the first PDCCH belongs are different, and the first cell and the cell to which the first PDCCH belongs are in different cell groups.

- As one dependent embodiment of the above embodiment, the first relationship means: the first cell and the cell to which the first PDCCH belongs belong to a same cell group, and the first cell and the cell to which the first PDCCH belongs are a secondary cell and a primary cell, respectively; and the second relationship means: the first cell and the cell to which the first PDCCH belongs belong to a same cell group, and the first cell is a non-serving cell, while the cell to which the first PDCCH belongs is a serving cell.

- As one dependent embodiment of the above embodiment, the first relationship means: the first cell and the cell to which the first PDCCH belongs are different, and the first cell and the cell to which the first PDCCH belongs are in a same frequency range (FR); and the second relationship means: the first cell and the cell to which the first PDCCH belongs are different, and the first cell and the cell to which the first PDCCH belongs are in different frequency ranges.

As one embodiment, "the first cell and the cell to which the first PDCCH belongs are the same" and "the first PDCCH is a non-LTM PDCCH order" are equivalent or may be used interchangeably.

As one embodiment, "the first cell and the cell to which the first PDCCH belongs are the same" and "the first PDCCH is a PDCCH order of LTM" are equivalent or may be used interchangeably.

As one embodiment, "the first cell is a cell other than the cell to which the first PDCCH belongs" and "the first PDCCH is a PDCCH order of LTM" are equivalent or may be used interchangeably.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used for determining a value of a parameter $N_{T,2}$ used when the first threshold is calculated.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used for determining a value of a parameter $\Delta_{BWPSwitching}$ used when the first threshold is calculated.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used for determining a value of a parameter $\Delta_{Delay}$ used when the first threshold is calculated.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used for determining a value of a parameter $T_{switch}$ used when the first threshold is calculated.

As one embodiment, the technical feature of "the relationship between both of the first cell and the cell to which the first PDCCH belongs is used for determining the first threshold" comprises the following meaning: the relationship between both of the first cell and the cell to which the first PDCCH belongs is used for determining a value of a parameter $\Delta_{LTM}$ used when the first threshold is calculated, and the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$.

**Embodiment 7**

Embodiment 7 illustrates a schematic diagram of a first identifier according to one embodiment of the present application, as shown in FIG. 7. In FIG. 7, in case A and case B, the rectangle enclosed by the bold line block represents a second PDCCH. The two rectangles within the second PDCCH represent DCI and CRC carried by the second PDCCH, respectively. In case A, the first identifier scrambles the CRC. In case B, the first identifier is included in the DCI.

In Embodiment 7, the second PDCCH in the present application carries a first identifier. The first identifier is equal to an RNTI carried by the first PDCCH in the present application, or an air interface resource occupied by the first signal in the present application and an index value with which the first cell is associated in the present application are used together for determining the first identifier.

As one embodiment, introduction of the first identifier avoids misjudgment.

As one embodiment, the first identifier is a non-negative integer.

As one embodiment, the first identifier is a four-digit hexadecimal integer.

As one embodiment, the first identifier is an RNTI.

As one embodiment, the first identifier is a C-RNTI.

As one embodiment, the first identifier is an LTM-RNTI.

As one embodiment, the first identifier is an RA-RNTI.

As one embodiment, the first identifier is an LTM-RA-RNTI.

As one embodiment, the first identifier is an RNTI for LTM.

As one embodiment, the technical feature of "the second PDCCH carries a first identifier" comprises the following meaning: the first identifier is used for a scrambling code of CRC of the second PDCCH.

As one embodiment, the technical feature of "the second PDCCH carries a first identifier" comprises the following meaning: CRC of a DCI format carried by the second PDCCH is scrambled by the first identifier.

As one embodiment, the technical feature of "the second PDCCH carries a first identifier" comprises the following meaning: CRC of a DCI format used by DCI mapped to the second PDCCH is scrambled by the first identifier.

As one embodiment, the technical feature of "the second PDCCH carries a first identifier" comprises the following meaning: the first identifier is used for initializing a scrambling code sequence generator for the second PDCCH.

As one embodiment, the technical feature of "the second PDCCH carries a first identifier" comprises the following meaning: the first identifier is used for initializing a scrambling code sequence generator for generating coded bits of the second PDCCH.

As one embodiment, the technical feature of "the second PDCCH carries a first identifier" comprises the following meaning: the first identifier is used for generating the second PDCCH.

As one embodiment, the technical feature of "the second PDCCH carries a first identifier" comprises the following meaning: at least one field included in the second PDCCH is used for explicitly or implicitly indicating the first identifier.

As one embodiment, the technical feature of "the second PDCCH carries a first identifier" comprises the following meaning: at least one field included in a DCI format used by DCI mapped to the second PDCCH is used for explicitly or implicitly indicating the first identifier.

As one embodiment, the technical feature of "the first identifier is equal to an RNTI carried by the first PDCCH or an air interface resource occupied by the first signal and an index value with which the first cell is associated are used together for determining the first identifier" comprises the following meaning: the first identifier is equal to the RNTI carried by the first PDCCH.

As one embodiment, the technical feature of "the first identifier is equal to an RNTI carried by the first PDCCH or an air interface resource occupied by the first signal and an index value with which the first cell is associated are used together for determining the first identifier" comprises the following meaning: the air interface resource occupied by the first signal and the index value with which the first cell is associated are used together for determining the first identifier.

As one embodiment, the RNTI carried by the first PDCCH is a C-RNTI configured for or allocated to the first node device in the cell to which the first PDCCH belongs.

As one embodiment, the RNTI carried by the first PDCCH is an RNTI dedicated for LTM that is configured for or allocated to the first node device.

As one embodiment, the RNTI carried by the first PDCCH is not equal to a C-RNTI configured for or allocated to the first node device in the cell to which the first PDCCH belongs.

As one embodiment, the RNTI carried by the first PDCCH and a C-RNTI configured for or allocated to the first node device in the cell to which the first PDCCH belongs are independently configured.

As one embodiment, the RNTI carried by the first PDCCH is configured through user equipment-specific (UE-specific) RRC signaling.

As one embodiment, the RNTI carried by the first PDCCH and a cell set (or list) to which the first cell belongs are configured through same RRC signaling.

As one embodiment, the RNTI carried by the first PDCCH and a PRACH configuration to which the first signal belongs are configured through same RRC signaling.

As one embodiment, the air interface resource occupied by the first signal comprises any combination of one or more of the following: a time-domain resource occupied by the first signal, a frequency-domain resource occupied by the first signal, and the random access preamble sequence carried by the first signal.

As one embodiment, the index value with which the first cell is associated is a physical cell identity (PCID, physical cell ID) of the first cell.

As one embodiment, the index value with which the first cell is associated is a serving cell index configured for or allocated to the first cell.

As one embodiment, the index value with which the first cell is associated is one logic index or logic identifier configured for or allocated to the first cell.

As one embodiment, the index value with which the first cell is associated is an index in one list.

As one embodiment, the index value with which the first cell is associated is a row index in one list.

As one embodiment, the index value with which the first cell is associated is an index or a position of an element comprising the first cell in one list.

As one embodiment, the index value with which the first cell is associated is an index or a position of one IE (information element) for the first cell in an IE list to which the IE belongs.

As one embodiment, the index value with which the first cell is associated is an index value or an identifier value indicated by one field in one IE (information element) for the first cell.

As one embodiment, the index value with which the first cell is associated is equal to an index value for the first cell that is indicated by the first PDCCH.

As one embodiment, the index value with which the first cell is associated is equal to a value of one field for the first cell that is in the first PDCCH.

As one embodiment, the technical feature of "an air interface resource occupied by the first signal and an index value with which the first cell is associated are used together for determining the first identifier" comprises the following meaning: the air interface resource occupied by the first signal and the index value with which the first cell is associated are used together by the first node device in the present application for determining the first identifier.

As one embodiment, the technical feature of "an air interface resource occupied by the first signal and an index value with which the first cell is associated are used together for determining the first identifier" comprises the following meaning: the air interface resource occupied by the first signal and the index value with which the first cell is associated are used together for calculating the first identifier.

As one embodiment, the technical feature of "an air interface resource occupied by the first signal and an index value with which the first cell is associated are used together for determining the first identifier" comprises the following meaning: a position of a time-frequency resource occupied by the first signal in time-frequency domain and the index value with which the first cell is associated are used together for calculating the first identifier.

As one embodiment, the technical feature of "an air interface resource occupied by the first signal and an index value with which the first cell is associated are used together for determining the first identifier" comprises the following meaning: the first identifier is linearly correlated with an index of an OFDM symbol occupied by the first signal in time domain, the first identifier is linearly correlated with an index of one slot to which at least one OFDM symbol occupied by the first signal in time domain belongs, the first identifier is linearly correlated with an index of the first signal in frequency domain, and the first identifier is linearly correlated with the index value with which the first cell is associated.

As one embodiment, the technical feature of "an air interface resource occupied by the first signal and an index value with which the first cell is associated are used together for determining the first identifier" comprises the following meaning: the first identifier is linearly correlated with an index of an OFDM symbol occupied by the first signal in time domain, the first identifier is linearly correlated with an index of one slot to which at least one OFDM symbol occupied by the first signal in time domain belongs, the first identifier is linearly correlated with an index of the first signal in frequency domain, the first identifier is linearly correlated with the index value with which the first cell is associated, and the first identifier is linearly correlated with an index of the random access preamble sequence carried by the first signal.

As one embodiment, the technical feature of "an air interface resource occupied by the first signal and an index value with which the first cell is associated are used together for determining the first identifier" comprises the following meaning: the first identifier is linearly correlated with the index value with which the first cell is associated, and the first identifier is linearly correlated with an index of the random access preamble sequence carried by the first signal.

As one embodiment, the technical feature of "an air interface resource occupied by the first signal and an index value with which the first cell is associated are used together for determining the first identifier" is achieved by satisfying the following equation:

First identifier = $1 + s\_id + 14 \times t\_id + 14 \times 80 \times f\_id + 14 \times 80 \times 8 \times ul\_carrier\_id + 14 \times 80 \times 8 \times 2 \times$ index value with which the first cell is associated

wherein s_id is an index of an earliest OFDM symbol in a PRACH occasion occupied by the first signal, t_id is an index, in a system frame, of an earliest slot to which the PRACH occasion occupied by the first signal belongs (or included in the PRACH occasion occupied by the first signal), f_id is an index, in frequency domain, of the PRACH occasion occupied by the first signal, and ul_carrier_id is an identifier of an uplink carrier type (NUL or SUL) to which the first signal is transported.

As one embodiment, the technical feature of "an air interface resource occupied by the first signal and an index value with which the first cell is associated are used together for determining the first identifier" is achieved by satisfying the following equation:

First identifier = $1 + s\_id + 14 \times t\_id + 14 \times 80 \times f\_id + 14 \times 80 \times 8 \times ul\_carrier\_id + 14 \times 80 \times 8 \times 2 \times$ preamble sequence index $+ 14 \times 80 \times 8 \times 2 \times 64 \times$ index value with which the first cell is associated

wherein s_id is an index of an earliest OFDM symbol in a PRACH occasion occupied by the first signal, t_id is an index, in a system frame, of an earliest slot to which the PRACH occasion occupied by the first signal belongs (or included in the PRACH occasion occupied by the first signal), f_id is an index, in frequency domain, of the PRACH occasion occupied by the first signal, ul_carrier_id is an identifier of an uplink carrier type (NUL or SUL) to which the first signal is transported, and the "preamble sequence index" represents the index of the random access preamble sequence carried by the first signal.

As one embodiment, the technical feature of "an air interface resource occupied by the first signal and an index value with which the first cell is associated are used together for determining the first identifier" is achieved by satisfying the following equation:

First identifier = $1 + s\_id + 14 \times t\_id + 14 \times 80 \times f\_id + 14 \times 80 \times 8 \times ul\_carrier\_id + 14 \times 80 \times 8 \times 2 + 14 \times 80 \times 8 \times 3 \times$ index value with which the first cell is associated

wherein s_id is an index of an earliest OFDM symbol in a PRACH occasion occupied by the first signal, t_id is an index, in a system frame, of an earliest slot to which the PRACH occasion occupied by the first signal belongs (or included in the PRACH occasion occupied by the first signal), f_id is an index, in frequency domain, of the PRACH occasion occupied by the first signal, and ul_carrier_id is an identifier of an uplink carrier type (NUL or SUL) to which the first signal is transported.

As one embodiment, the technical feature of "an air interface resource occupied by the first signal and an index value with which the first cell is associated are used together for determining the first identifier" is achieved by satisfying the following equation:

First identifier = 1 + s_id + 14 × t_id + 14 × 80 × f_id + 14 × 80 × 8 × ul_carrier_id + 14 × 80 × 8 × 2+14 × 80 × 8 × 3× permeable sequence index +14 × 80 × 8 × 3×64× index value with which the first cell is associated

wherein s_id is an index of an earliest OFDM symbol in a PRACH occasion occupied by the first signal, t_id is an index, in a system frame, of an earliest slot to which the PRACH occasion occupied by the first signal belongs (or included in the PRACH occasion occupied by the first signal), f_id is an index, in frequency domain, of the PRACH occasion occupied by the first signal, ul_carrier_id is an identifier of an uplink carrier type (NUL or SUL) to which the first signal is transported, and the "preamble sequence index" represents the index of the random access preamble sequence carried by the first signal.

As one embodiment, the technical feature of "an air interface resource occupied by the first signal and an index value with which the first cell is associated are used together for determining the first identifier" is achieved by satisfying the following equation:

First identifier = 1 + ul_carrier_id + 2× preamble sequence index +64× index value with which the first cell is associated

wherein ul_carrier_id is an identifier of an uplink carrier type (NUL or SUL) to which transport of the first signal belongs, and the "preamble sequence index" represents the index of the random access preamble sequence carried by the first signal.

As one embodiment, the technical feature of "an air interface resource occupied by the first signal and an index value with which the first cell is associated are used together for determining the first identifier" is achieved by satisfying the following equation:

First identifier = 1 + f_id + 8 × ul_carrier_id + 8 × 2× preamble sequence index +8×2×64× index value associated with the first cell

wherein f_id is an index, in frequency domain, of the PRACH occasion occupied by the first signal, ul_carrier_id is an identifier of an uplink carrier type (NUL or SUL) to which the first signal is transported, and the "preamble sequence index" represents the index of the random access preamble sequence carried by the first signal.

**Embodiment 8**

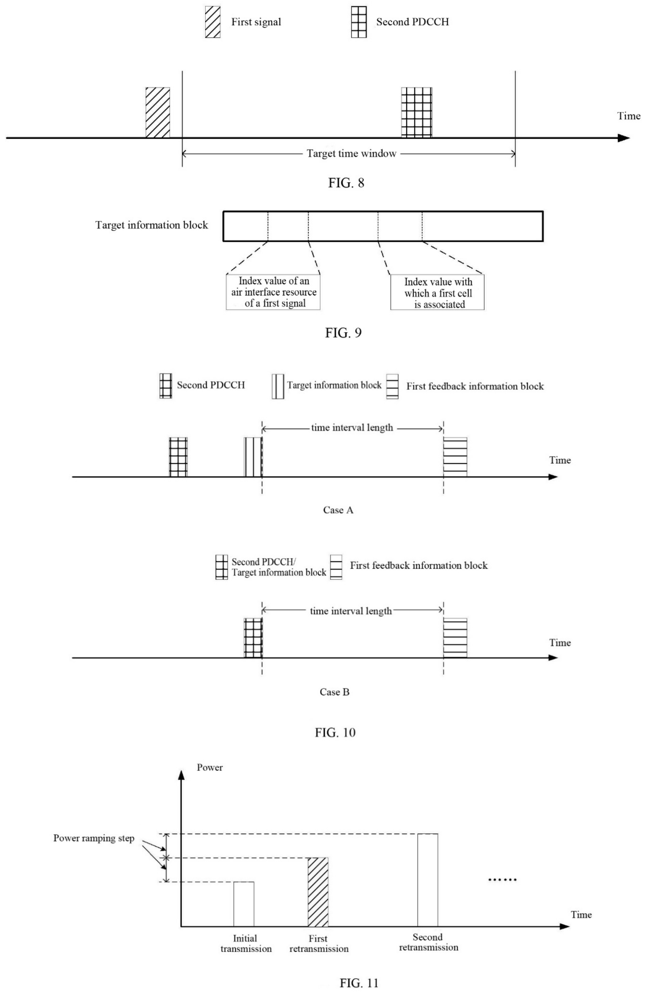

Embodiment 8 illustrates a schematic diagram of a target time window according to one embodiment of the present application, as shown in FIG. 8. In FIG. 8, the horizontal axis represents time, the rectangle filled with diagonal lines represents the first signal, and the rectangle filled with cross lines represents the second PDCCH, wherein the second PDCCH belongs to the target time window in time domain.

In Embodiment 8, the second PDCCH in the present application belongs to the target time window in time domain, and at least one of a time length of the target time window or a start moment of the target time window is configured through signaling; and the target time window and a random access response window associated with the cell to which the first PDCCH in the present application belongs are different.

As one embodiment, the target time window and the random access response window associated with the cell to which the first PDCCH belongs are configured independently to meet needs of different scenarios and improve flexibility.

As one embodiment, the target time window is a random access response window.

As one embodiment, the target time window is a random access response window for the first cell.

As one embodiment, the target time window is an LTM response window.

As one embodiment, the target time window is an LTM response window for the first cell.

As one embodiment, the target time window is used for determining monitoring of the second PDCCH.

As one embodiment, the second PDCCH is detected within the target time window to be used for considering that a procedure to which the first signal belongs is completed.

As one embodiment, the second PDCCH is detected within the target time window to be used for considering that a procedure to which the first signal belongs is successful.

As one embodiment, the technical feature of "at least one of a time length of the target time window or a start moment of the target time window is configured through signaling" comprises the following meaning: both of the time length of the target time window and the start moment of the target time window are configured through signaling.

As one embodiment, the technical feature of "at least one of a time length of the target time window or a start moment of the target time window is configured through signaling" comprises the following meaning: both of the time length of the target time window is configured through signaling.

As one embodiment, the technical feature of "at least one of a time length of the target time window or a start moment of the target time window is configured through signaling" comprises the following meaning: the start moment of the target time window is configured through signaling.

As one embodiment, the technical feature of "at least one of a time length of the target time window or a start moment of the target time window is configured through signaling" comprises the following meaning: both of the time length of the target time window and the start moment of the target time window are configured through same signaling.

As one embodiment, the technical feature of "at least one of a time length of the target time window or a start moment of the target time window is configured through signaling" comprises the following meaning: the time length of the target time window and the start moment of the target time window are configured through two different fields or IEs, respectively.

As one embodiment, at least one of the time length of the target time window or the start moment of the target time window is configured through signaling for the first cell.

As one embodiment, at least one of the time length of the target time window or the start moment of the target time window is configured through RRC layer signaling.

As one embodiment, at least one of the time length of the target time window or the start moment of the target time window is related to a configuration of a common search space set in the first cell.

As one embodiment, at least one of the time length of the target time window or the start moment of the target time window and a cell set (or list) to which the first cell belongs are configured through same RRC signaling.

As one embodiment, at least one of the time length of the target time window or the start moment of the target time window and a PRACH configuration to which the first signal belongs are configured through same RRC signaling.

As one embodiment, the random access response window associated with the cell to which the first PDCCH belongs is a random access response window for the cell to which the first PDCCH belongs.

As one embodiment, the random access response window associated with the cell to which the first PDCCH belongs is a random access response window configured by the cell to which the first PDCCH belongs.

As one embodiment, the random access response window associated with the cell to which the first PDCCH belongs is a random access response window used for a random access procedure in the cell to which the first PDCCH belongs.

As one embodiment, the random access response window associated with the cell to which the first PDCCH belongs is a random access response window belongs to a random access procedure in the cell to which the first PDCCH belongs.

As one embodiment, the random access response window associated with the cell to which the first PDCCH belongs is a random access response window used for a random access procedure in the cell to which the first PDCCH belongs.

As one embodiment, the random access response window associated with the cell to which the first PDCCH belongs is a random access response window configured through configuration signaling of an uplink BWP (bandwidth part) that belongs to the cell to which the first PDCCH belongs.

As one embodiment, the random access response window associated with the cell to which the first PDCCH belongs is a random access response window configured through configuration signaling specific to the cell to which the first PDCCH belongs.

As one embodiment, the technical feature of "the target time window and the random access response window associated with the cell to which the first PDCCH belongs are different" comprises the following meaning: the target time window is used for an LTM procedure, while the random access response window associated with the cell to which the first PDCCH belongs is used for a random access procedure.

As one embodiment, the technical feature of "the target time window and the random access response window associated with the cell to which the first PDCCH belongs are different" comprises the following meaning: the target time window is used for a random access procedure for the first cell, while the random access response window associated with the cell to which the first PDCCH belongs is used for a random access procedure for the cell to which the first PDCCH belongs.

As one embodiment, the technical feature of "the target time window and the random access response window associated with the cell to which the first PDCCH belongs are different" comprises the following meaning: the target time window and the random access response window associated with the cell to which the first PDCCH belongs are independently configured.

As one embodiment, the technical feature of "the target time window and the random access response window associated with the cell to which the first PDCCH belongs are different" comprises the following meaning: the target time window and the random access response window associated with the cell to which the first PDCCH belongs are configured through two RRC IEs, respectively.

As one embodiment, the technical feature of "the target time window and the random access response window associated with the cell to which the first PDCCH belongs are different" comprises the following meaning: the target time window and the random access response window associated with the cell to which the first PDCCH belongs are configured through two fields in a same RRC IE, respectively.

As one embodiment, the technical feature of "the target time window and the random access response window associated with the cell to which the first PDCCH belongs are different" comprises the following meaning: the time length of the target time window and a time length of the random access response window associated with the cell to which the first PDCCH belongs are configured through two RRC IEs, respectively.

As one embodiment, the technical feature of "the target time window and the random access response window associated with the cell to which the first PDCCH belongs are different" comprises the following meaning: the time length of the target time window and a time length of the random access response window associated with the cell to which the first PDCCH belongs are configured through two fields in a same RRC IE, respectively.

As one embodiment, the technical feature of "the target time window and the random access response window associated with the cell to which the first PDCCH belongs are different" comprises the following meaning: the target time window and the random access response window associated with the cell to which the first PDCCH belongs do not overlap or only partially overlap in time domain.

As one embodiment, the technical feature of "the target time window and the random access response window associated with the cell to which the first PDCCH belongs are different" comprises the following meaning: the time length of the target time window and a time length of the random access response window associated with the cell to which the first PDCCH belongs are not equal.

**Embodiment 9**

Embodiment 9 illustrates a schematic diagram of a target information block according to one embodiment of the present application, as shown in FIG. 9. In FIG. 9, the bold line rectangular box represents the target information block, wherein an index value of an air interface resource occupied by a first signal and/or an index value associated with a first cell belong/belongs to the target information block.

In Embodiment 9, the target information block in the present application comprises at least one of the index value of the air interface resource occupied by the first signal in the present application or the index value with which the first cell is associated in the present application.

As one embodiment, the target information block comprises an index value of a cell, ensuring a corresponding relationship between a timing advance value and the cell.

As one embodiment, the index value of the air interface resource occupied by the first signal comprises any combination of one or more of the following: an index of an earliest OFDM symbol in a PRACH occasion occupied by the first signal, an index, in a system frame, of an earliest slot to which the PRACH occasion occupied by the first signal belongs (or included in the PRACH occasion occupied by the first signal), an index, in frequency domain, of the PRACH occasion occupied by the first signal, an identifier of an uplink carrier type to which transport of the first signal belongs, and an index of a random access preamble sequence carried by the first signal.

As one embodiment, the index value of the air interface resource occupied by the first signal is an index value or an identifier value calculated from any combination of one or more of the following: an index of an earliest OFDM symbol in a PRACH occasion occupied by the first signal, an index, in a system frame, of an earliest slot to which the PRACH occasion occupied by the first signal belongs (or included in the PRACH occasion occupied by the first signal), an index, in frequency domain, of the PRACH occasion occupied by the first signal, an identifier of an uplink carrier type to which transport of the first signal belongs, and an index of a random access preamble sequence carried by the first signal.

As one embodiment, the index value of the air interface resource occupied by the first signal is a RAPID (random access preamble ID).

As one embodiment, the index value of the air interface resource occupied by the first signal is determined by a RAPID and the PRACH occasion occupied by the first signal.

As one embodiment, the index value of the air interface resource occupied by the first signal comprises the first identifier in the present application.

As one embodiment, the technical feature of "the target information block comprises at least one of an index value of an air interface resource occupied by the first signal or an index value with which the first cell is associated" comprises the following meaning: the target information block comprises the index value of the air interface resource occupied by the first signal and the index value with which the first cell is associated.

As one embodiment, the technical feature of "the target information block comprises at least one of an index value of an air interface resource occupied by the first signal or an index value with which the first cell is associated" comprises the following meaning: the target information block comprises the index value of the air interface resource occupied by the first signal.

As one embodiment, the technical feature of "the target information block comprises at least one of an index value of an air interface resource occupied by the first signal or an index value with which the first cell is associated" comprises the following meaning: the target information block comprises the index value with which the first cell is associated.

As one embodiment, the technical feature of "the target information block comprises at least one of an index value of an air interface resource occupied by the first signal or an index value with which the first cell is associated" comprises the following meaning: at least one bit included in the target information block is used for explicitly or implicitly indicating at least one of the index value of the air interface resource occupied by the first signal or the index value with which the first cell is associated.

As one embodiment, the technical feature of "the target information block comprises at least one of an index value of an air interface resource occupied by the first signal or an index value with which the first cell is associated" comprises the following meaning: the target information block comprises at least one bit used for explicitly or implicitly indicating at least one of the index value of the air interface resource occupied by the first signal or the index value with which the first cell is associated.

As one embodiment, the technical feature of "the target information block comprises at least one of an index value of an air interface resource occupied by the first signal or an index value with which the first cell is associated" comprises the following meaning: at least one MAC IE included in the target information block is used for explicitly or implicitly indicating at least one of the index value of the air interface resource occupied by the first signal or the index value associated with the first cell.

As one embodiment, the technical feature of "the target information block comprises at least one of an index value of an air interface resource occupied by the first signal or an index value with which the first cell is associated" comprises the following meaning: a MAC PDU included in the target information block comprises a bit used for explicitly or implicitly indicating at least one of the index value of the air interface resource occupied by the first signal or the index value associated with the first cell.

As one embodiment, the technical feature of "the target information block comprises at least one of an index value of an air interface resource occupied by the first signal or an index value with which the first cell is associated" comprises the following meaning: at least one MAC header included in the target information block is used for explicitly or implicitly indicating at least one of the index value of the air interface resource occupied by the first signal or the index value associated with the first cell.

As one embodiment, the technical feature of "the target information block comprises at least one of an index value of an air interface resource occupied by the first signal or an index value with which the first cell is associated" comprises the following meaning: a MAC payload included in the target information block comprises a bit used for explicitly or implicitly indicating at least one of the index value of the air interface resource occupied by the first signal or the index value associated with the first cell.

As one embodiment, the technical feature of "the target information block comprises at least one of an index value of an air interface resource occupied by the first signal or an index value with which the first cell is associated" comprises the following meaning: at least one field included in the target information block is used for explicitly or implicitly indicating at least one of the index value of the air interface resource occupied by the first signal or the index value associated with the first cell.

As one embodiment, the technical feature of "the target information block comprises at least one of an index value of an air interface resource occupied by the first signal or an index value with which the first cell is associated" comprises the following meaning: the target information block comprises at least one field used for explicitly or implicitly indicating at least one of the index value of the air interface resource occupied by the first signal or the index value associated with the first cell.

## Embodiment 10

Embodiment 10 illustrates a schematic diagram of a first feedback information block according to one embodiment of the present application, as shown in FIG. 10. In FIG. 10, in case A and case B, the horizontal axis represents time, and the rectangle filled with horizontal lines represents the first feedback information block. In case A, the rectangle filled with cross lines represents a second PDCCH, and the rectangle filled with vertical lines represents a target information block. In case B, the rectangle filled with cross lines represents the second PDCCH, and the target information block is transported on the second PDCCH.

In Embodiment 10, the second PDCCH in the present application is used for determining a time-frequency resource occupied by the target information block in the present application, and at least one of the second PDCCH or the target information block is used for determining a time interval length between the target information block and the first feedback information block in the present application; or the second PDCCH carries the target information block, and the target information block is used for determining a time interval length between the second PDCCH and the first feedback information block.

As one embodiment, the second PDCCH carries the target information block, thereby reducing unnecessary header overheads and ensuring correct reception of the target information block.

As one embodiment, the time-frequency resource occupied by the target information block is a time-frequency resource occupied by (or allocated to or recourse mapped to) a physical channel or physical signal to which the target information block is mapped.

As one embodiment, the time-frequency resource occupied by the target information block is a time-frequency resource occupied by (or allocated to or recourse mapped to) a physical channel or physical signal carrying the target information block.

As one embodiment, the time-frequency resource occupied by the target information block comprises at least one of a time-domain resource occupied by the target information block or a frequency-domain resource occupied by the target information block.

As one embodiment, the time-frequency resource occupied by the target information block comprises a slot or an OFDM symbol occupied by the target information block in time domain.

As one embodiment, the time-frequency resource occupied by the target information block comprises a resource block (RB) or a subcarrier occupied by the target information block in frequency domain.

As one embodiment, the technical feature of "the second PDCCH is used for determining a time-frequency resource occupied by the target information block" comprises the following meaning: the second PDCCH is used by the first node device in the present application for determining the time-frequency resource occupied by the target information block.

As one embodiment, the technical feature of "the second PDCCH is used for determining a time-frequency resource occupied by the target information block" comprises the following meaning: at least one field in DCI carried by the second PDCCH is used for explicitly or implicitly indicating the time-frequency resource occupied by the target information block.

As one embodiment, the technical feature of "the second PDCCH is used for determining a time-frequency resource occupied by the target information block" comprises the following meaning: a time-frequency resource occupied by the second PDCCH is used for determining the time-frequency resource occupied by the target information block.

As one embodiment, the technical feature of "the second PDCCH is used for determining a time-frequency resources occupied by the target information block" comprises the following meaning: an offset or a relative position between the time-frequency resource occupied by the target information block and a time-frequency resource occupied by the second PDCCH is predefined or configurable.

As one embodiment, the second PDCCH is further used for determining any combination of one or more of the following: a redundancy version used by a physical channel or physical signal carrying the target information block, a modulation coding scheme employed by the physical channel or physical signal carrying the target information block, and mapping between a VRB (virtual resource block) and a PRB (physical resource block).

As one embodiment, the time interval length between the target information block and the first feedback information block is expressed in terms of a quantity of slots.

As one embodiment, the time interval length between the target information block and the first feedback information block is expressed in terms of a quantity of symbols.

As one embodiment, the time interval length between the target information block and the first feedback information block is expressed in terms of a quantity of slots and a quantity of symbols.

As one embodiment, the time interval length between the target information block and the first feedback information block is expressed in terms of an absolute time length.

As one embodiment, the time interval length between the target information block and the first feedback information block is a time interval length between a physical channel or physical signal carrying the target information block and a physical channel or physical signal carrying the first feedback information block.

As one embodiment, the time interval length between the target information block and the first feedback information block is a time interval length between a start symbol (or a start slot or start moment) of a physical channel or physical signal carrying the target information block and a start symbol (or a start slot or start moment) of a physical channel or physical signal carrying the first feedback information block.

As one embodiment, the time interval length between the target information block and the first feedback information block is a time interval length between an end symbol (or an end slot or end moment) of a physical channel or physical signal carrying the target information block and a start symbol (or a start slot or start moment) of the physical channel or physical signal carrying the first feedback information block.

As one embodiment, the time interval length between the target information block and the first feedback information block is a time interval length between a start symbol (or a start slot or start moment) of a physical channel or physical signal carrying the target information block and an end symbol (or an end slot or end moment) of a physical channel or physical signal carrying the first feedback information block.

As one embodiment, the time interval length between the target information block and the first feedback information block is a time interval length between an end symbol (or an end slot or end moment) of a physical channel or physical signal carrying the target information block and an end symbol (or an end slot or end moment) of a physical channel or physical signal carrying the first feedback information block.

As one embodiment, the time interval length between the target information block and the first feedback information block is related to at least one of a subcarrier spacing (SCS) used by a physical channel or physical signal carrying the target information block and a subcarrier spacing used by a physical channel or physical signal carrying the first feedback information block.

As one embodiment, the time interval length between the target information block and the first feedback information block is related to a greater one of a subcarrier spacing (SCS) used by a physical channel or physical signal carrying the target information block and a subcarrier spacing used by a physical channel or physical signal carrying the first feedback information block.

As one embodiment, the technical feature of "at least one of the second PDCCH or the target information block is used for determining the time interval length between the target information block and the first feedback information block" comprises the following meaning: at least one of the second PDCCH or the target information block is used by the first node device in the present application for determining the time interval length between the target information block and the first feedback information block.

As one embodiment, the technical feature of "at least one of the second PDCCH or the target information block is used for determining the time interval length between the target information block and the first feedback information block" comprises the following meaning: at least one of the second PDCCH or the target information block is used for explicitly or implicitly indicating the time interval length between the target information block and the first feedback information block.

As one embodiment, the technical feature of "at least one of the second PDCCH or the target information block is used for determining the time interval length between the target information block and the first feedback information block" comprises the following meaning: both of the second PDCCH and the target information block are used for determining the time interval length between the target information block and the first feedback information block.

As one embodiment, the technical feature of "at least one of the second PDCCH or the target information block is used for determining the time interval length between the target information block and the first feedback information block" comprises the following meaning: all or part included in the second PDCCH is used for explicitly or implicitly indicating the time interval length between the target information block and the first feedback information block.

As one embodiment, the technical feature of "at least one of the second PDCCH or the target information block is used for determining the time interval length between the target information block and the first feedback information block" comprises the following meaning: all or part included in the target information block is used for explicitly or implicitly indicating the time interval length between the target information block and the first feedback information block.

As one embodiment, the technical feature of "at least one of the second PDCCH or the target information block is used for determining the time interval length between the target information block and the first feedback information block" comprises the following meaning: one or more MAC CEs in the target information block are used for explicitly or implicitly indicating the time interval length between the target information block and the first feedback information block.

As one embodiment, the technical feature of "at least one of the second PDCCH or the target information block is used for determining the time interval length between the target information block and the first feedback information block" comprises the following meaning: at least one of the second PDCCH or the target information block is used for explicitly or implicitly indicating a first quantity, where the first quantity is equal to a quantity of slots that use a first subcarrier spacing and by which the target information block and the first feedback information block are separated in time domain, and the first subcarrier spacing is equal to one of a subcarrier spacing used by a physical channel or physical signal carrying the target information block and a subcarrier spacing used by a physical channel or physical signal carrying the first feedback information block. As one dependent embodiment of the above embodiment, the first subcarrier spacing is equal to a greater one of the subcarrier spacing used by the physical channel or physical signal carrying the target information block and the subcarrier spacing used by the physical channel or physical signal carrying the first feedback information block. As one dependent embodiment of the above embodiment, the first subcarrier spacing is equal to a smaller one of the subcarrier spacing used by the physical channel or physical signal carrying the target information block and the subcarrier spacing used by the physical channel or physical signal carrying the first feedback information block.

As one embodiment, the technical feature of "at least one of the second PDCCH or the target information block is used for determining the time interval length between the target information block and the first feedback information block" comprises the following meaning: at least one of the second PDCCH or the target information block is used for explicitly or implicitly indicating a second quantity, where the second quantity is equal to a quantity of symbols that use a first subcarrier spacing and by which the target information block and the first feedback information block are separated in time domain, and the first subcarrier spacing is equal to a smaller one of a subcarrier spacing used by a physical channel or physical signal carrying the target information block and a subcarrier spacing used by a physical channel or physical signal carrying the first feedback information block. As one dependent embodiment of the above embodiment, the first subcarrier spacing is equal to a greater one of the subcarrier spacing used by the physical channel or physical signal carrying the target information block and the subcarrier spacing used by the physical channel or physical signal carrying the first feedback information block. As one dependent embodiment of the above embodiment, the first subcarrier spacing is equal to a smaller one of the subcarrier spacing used by the physical channel or physical signal carrying the target information block and the subcarrier spacing used by the physical channel or physical signal carrying the first feedback information block.

As one embodiment, the technical feature of "at least one of the second PDCCH or the target information block is used for determining the time interval length between the target information block and the first feedback information block" comprises the following meaning: at least one of the second PDCCH or the target information block is used for explicitly or implicitly indicating a first quantity and a second quantity, wherein the first quantity and the second quantity are equal to a quantity of slots that use a first subcarrier spacing and by which the target information block and the first feedback information block are separated in time domain and a quantity of symbols in the slots, respectively, and the first subcarrier spacing is equal to one of a subcarrier spacing used by a physical channel or physical signal carrying the target information block and a subcarrier spacing used by a physical channel or physical signal carrying the first feedback information block. As one dependent embodiment of the above embodiment, the first subcarrier spacing is equal to a greater one of the subcarrier spacing used by the physical channel or physical signal carrying the target information block and the subcarrier spacing used by the physical channel or physical signal carrying the first feedback information block. As one dependent embodiment of the above embodiment, the first subcarrier spacing is equal to a smaller one of the subcarrier spacing used by the physical channel or physical signal carrying the target information block and the subcarrier spacing used by the physical channel or physical signal carrying the first feedback information block.

As one embodiment, the technical feature of "at least one of the second PDCCH or the target information block is used for determining the time interval length between the target information block and the first feedback information block" comprises the following meaning: the second PDCCH and the target information block are used for explicitly or implicitly indicating a first quantity and a second quantity, respectively, wherein the first quantity and the second quantity are equal to a quantity of slots that use a first subcarrier spacing and by which the target information block and the first feedback information block are separated in time domain and a quantity of symbols in the slots, respectively, and the first subcarrier spacing is equal to one of a subcarrier spacing used by a physical channel or physical signal carrying the target information block and a subcarrier spacing used by a physical channel or physical signal carrying the first feedback information block.

As one embodiment, the technical feature of "at least one of the second PDCCH or the target information block is used for determining the time interval length between the target information block and the first feedback information block" comprises the following meaning: the second PDCCH and the target information block are used for explicitly or implicitly indicating a second quantity and a first quantity, respectively, wherein the first quantity and the second quantity are equal to a quantity of slots that use a first subcarrier spacing and by which the target information block and the first feedback information block are separated in time domain and a quantity of symbols in the slots, respectively, and the first subcarrier spacing is equal to one of a subcarrier spacing used by a physical channel or physical signal carrying the target information block and a subcarrier spacing used by a physical channel or physical signal carrying the first feedback information block.

As one embodiment, a subcarrier spacing used by a physical channel or physical signal carrying the target information block is configured, and a subcarrier spacing used by a physical channel or physical signal carrying the first feedback information block is configured.

As one embodiment, the time interval length between the second PDCCH and the first feedback information block is expressed in terms of a quantity of slots.

As one embodiment, the time interval length between the second PDCCH and the first feedback information block is expressed in terms of a quantity of symbols.

As one embodiment, the time interval length between the second PDCCH and the first feedback information block is expressed in terms of a quantity of slots and a quantity of symbols.

As one embodiment, the time interval length between the second PDCCH and the first feedback information block is expressed in terms of an absolute time length.

As one embodiment, the time interval length between the second PDCCH and the first feedback information block is a time interval between the second PDCCH and a physical channel or physical signal carrying the first feedback information block.

As one embodiment, the time interval length between the second PDCCH and the first feedback information block is a time interval length between a start symbol (or a start slot or start moment) of the second PDCCH and a start symbol (or start slot or start moment) of a physical channel or physical signal carrying the first feedback information block.

As one embodiment, the time interval length between the second PDCCH and the first feedback information block is a time interval length between an end symbol (or an end slot or end moment) of the second PDCCH and a start symbol (or a start slot or start moment) of a physical channel or physical signal carrying the first feedback information block.

As one embodiment, the time interval length between the second PDCCH and the first feedback information block is a time interval length between a start symbol (or a start slot or start moment) of the second PDCCH and an end symbol (or an end slot or end moment) of the physical channel or physical signal carrying the first feedback information block.

As one embodiment, the time interval length between the second PDCCH and the first feedback information block is a time interval length between an end symbol (or an end slot or end moment) of the second PDCCH and an end symbol (or an end slot or end moment) of the physical channel or physical signal carrying the first feedback information block.

As one embodiment, the time interval length between the second PDCCH and the first feedback information block is related to at least one of a subcarrier spacing (SCS, subcarrier spacing) used by the second PDCCH and a subcarrier spacing used by a physical channel or physical signal carrying the first feedback information block.

As one embodiment, the time interval length between the second PDCCH and the first feedback information block is related to a greater one of a subcarrier spacing used by the second PDCCH and a subcarrier spacing used by a physical channel or physical signal carrying the first feedback information block.

As one embodiment, the technical feature of "the target information block is used for determining a time interval length between the second PDCCH and the first feedback information block" comprises the following meaning: the target information block is used by the first node device in the present application for determining the time interval length between the second PDCCH and the first feedback information block.

As one embodiment, the technical feature of "the target information block is used for determining a time interval length between the second PDCCH and the first feedback information block" comprises the following meaning: at least one field included in the target information block is used for explicitly or implicitly indicating the time interval between the second PDCCH and the first feedback information block.

As one embodiment, the technical feature of "the target information block is used for determining a time interval length between the second PDCCH and the first feedback information block" comprises the following meaning: the target information block is used for explicitly or implicitly indicating a first quantity, wherein the first quantity is equal to a quantity of slots that use a first subcarrier spacing and by which the second PDCCH and the first feedback information block are separated in time domain, and the first subcarrier spacing is equal to one of a subcarrier spacing used for carrying the second PDCCH and a subcarrier spacing used by a physical channel or physical signal carrying the first feedback information block. As one dependent embodiment of the above embodiment, the first subcarrier spacing is equal to a greater one of the subcarrier spacing used by the second PDCCH and the subcarrier spacing used by the physical channel or physical signal carrying the first feedback information block. As one dependent embodiment of the above embodiment, the first subcarrier spacing is equal to a smaller one of the subcarrier spacing used by the second PDCCH and the subcarrier spacing used by the physical channel or physical signal carrying the first feedback information block.

As one embodiment, the technical feature of "the target information block is used for determining a time interval length between the second PDCCH and the first feedback information block" comprises the following meaning: the target information block is used for explicitly or implicitly indicating a second quantity, wherein the second quantity is equal to a quantity of symbols that use a first subcarrier spacing and by which the second PDCCH and the first feedback information block are separated in time domain, and the first subcarrier spacing is equal to one of a subcarrier spacing used by the second PDCCH and a subcarrier spacing used by a physical channel or physical signal carrying the first feedback information block. As one dependent embodiment of the above embodiment, the first subcarrier spacing is equal to a greater one of the subcarrier spacing used by the second PDCCH and the subcarrier spacing used by the physical channel or physical signal carrying the first feedback information block. As one dependent embodiment of the above embodiment, the first subcarrier spacing is equal to a smaller one of the subcarrier spacing used by the second PDCCH and the subcarrier spacing used by the physical channel or physical signal carrying the first feedback information block.

As one embodiment, the technical feature of "the target information block is used for determining a time interval length between the second PDCCH and the first feedback information block" comprises the following meaning: the target information block is used for explicitly or implicitly indicating a first quantity and a second quantity, wherein the first quantity and the second quantity are equal to a quantity of slots that use a first subcarrier spacing and by which the second PDCCH and the first feedback information block are separated in time domain and a quantity of symbols in the slots, respectively, and the first subcarrier spacing is equal to one of a subcarrier spacing used by the second PDCCH and a subcarrier spacing used by a physical channel or physical signal carrying the first feedback information block. As one dependent embodiment of the above embodiment, the first subcarrier spacing is equal to a greater one of the subcarrier spacing used by the second PDCCH and the subcarrier spacing used by the physical channel or physical signal carrying the first feedback information block. As one dependent embodiment of the above embodiment, the first subcarrier spacing is equal to a smaller one of the subcarrier spacing used by the second PDCCH and the subcarrier spacing used by the physical channel or physical signal carrying the first feedback information block.

## Embodiment 11

Embodiment 11 illustrates a schematic diagram of a power ramping step according to one embodiment of the present application, as shown in FIG. 11. In FIG, 11, the horizontal axis represents time, the vertical axis represents power, each rectangle represents one time of transport of a random access channel, the rectangle filled with diagonal lines represents a first signal, and a power ramping step is used for determining a power ramping amplitude between two times of transport.

In Embodiment 11, the first information block in the present application is used for determining a power ramping step, the first PDCCH in the present application is used for determining a first count value, and the power ramping step and the first count value are used together for determining a transmit power value of the first signal in the present application.

As one embodiment, by determining the first count value through the first PDCCH, UE can accurately set the transmit power value of the first signal, thereby ensuring detection performance of the first signal.

As one embodiment, a unit of the power ramping step is dB.

As one embodiment, a unit of the power ramping step is milliwatt (mW).

As one embodiment, a unit of the power ramping step is dBm.

As one embodiment, the power ramping step is a non-negative integer.

As one embodiment, the power ramping step is not less than 0.

As one embodiment, the power ramping step is equal to one of 0 dB, 2 dB, 4 dB, or 6 dB.

As one embodiment, the power ramping step is a power-ramping factor.

As one embodiment, the power ramping step is a power adjustment (or change) value during retransmission of a PRACH (or a preamble).

As one embodiment, the power ramping step is equal to a power ramping step of a PRACH configured for the cell to which the first PDCCH belongs.

As one embodiment, the power ramping step is equal to a power ramping step of a dedicated PRACH configured for the cell to which the first PDCCH belongs.

As one embodiment, the power ramping step is equal to a power ramping step of a cell-specific or common PRACH configured for the cell to which the first PDCCH belongs.

As one embodiment, the power ramping step is independent of a power ramping step of a PRACH configured for the cell to which the first PDCCH belongs.

As one embodiment, the power ramping step and a power ramping step of a PRACH configured for the cell to which the first PDCCH belongs are configured separately by two fields or two IEs.

As one embodiment, the power ramping step and a power ramping step of a PRACH configured for the cell to which the first PDCCH belongs are independent from each other.

As one embodiment, the power ramping step is equal to a power ramping step of a PRACH configured for the first cell.

As one embodiment, the power ramping step is equal to a power ramping step of a PRACH configured for a cell other than the cell to which the first PDCCH belongs.

As one embodiment, the technical feature of "the first information block is used for determining a power ramping step" comprises the following meaning: the first information block is used by the first node device in the present application for determining the power ramping step.

As one embodiment, the technical feature of "the first information block is used for determining a power ramping step" comprises the following meaning: all or part included in the first information block is used for explicitly or implicitly indicating the power ramping step.

As one embodiment, the technical feature of "the first information block is used for determining a power ramping step" comprises the following meaning: the first information block and at least one parameter other than a parameter included in the first information block are used together for determining the power ramping step.

As one embodiment, the technical feature of "the first information block is used for determining a power ramping step" comprises the following meaning: all or part included in the first information block is used for explicitly or implicitly indicating a candidate power ramping step, the power ramping step is equal to a product of the candidate power ramping step and an expansion factor, and the expansion factor is predefined or configured.

As one embodiment, the first count value is a non-negative integer.

As one embodiment, the first count value is a positive integer.

As one embodiment, the first count value does not exceed a maximum quantity of retransmission times for a PRACH (or a preamble) for a cell.

As one embodiment, a maximum value of the first count value does not exceed 3.

As one embodiment, a maximum value of the first count value does not exceed 7.

As one embodiment, a maximum value of the first count value does not exceed 15.

As one embodiment, the first count value is used for retransmission counting of a PRACH (or a preamble).

As one embodiment, the first count value is used for determining a retransmission sequence number for a PRACH (or a preamble).

As one embodiment, the first count value is used for retransmission counting of a PRACH (or a preamble) for a cell.

As one embodiment, the first count value is used for retransmission counting of a PRACH (or a preamble) for the first cell.

As one embodiment, the first count value is used for retransmission counting of a PRACH (or a preamble) for a cell in LTM.

As one embodiment, the technical feature of "the first PDCCH is used for determining a first count value" comprises the following meaning: the first PDCCH is used by the first node device in the present application for determining the first count value.

As one embodiment, the technical feature of "the first PDCCH is used for determining a first count value" comprises the following meaning: all or part included in DCI carried by the first PDCCH is used for explicitly or implicitly indicating the first count value.

As one embodiment, the technical feature of "the first PDCCH is used for determining a first count value" comprises the following meaning: at least one field in DCI carried by the first PDCCH is used for explicitly or implicitly indicating the first count value.

As one embodiment, the technical feature of "the power ramping step and the first count value are used together for determining a transmit power value of the first signal" comprises the following meaning: the power ramping step and the first count value are used together by the first node device in the present application for determining a transmit power value of the first signal.

As one embodiment, the technical feature of "the power ramping step and the first count value are used together for determining a transmit power value of the first signal" comprises the following meaning: the power ramping step and the first count value are used together for calculating the transmit power value of the first signal.

As one embodiment, the technical feature of "the power ramping step and the first count value are used together for determining a transmit power value of the first signal" comprises the following meaning: a product of the power ramping step and the first count value is used for calculating the transmit power value of the first signal.

As one embodiment, the technical feature of "the power ramping step and the first count value are used together for determining a transmit power value of the first signal" comprises the following meaning: a product of the power ramping step and a difference of the first count value minus 1 is used for calculating the transmit power value of the first signal.

As one embodiment, the technical feature of "the power ramping step and the first count value are used together for determining a transmit power value of the first signal" comprises the following meaning: the transmit power value of the first signal is equal to a smaller value between a first upper limit value and a first power value, the first upper limit value is a maximum output power at which the first node device is configured, and the first power value and a product of the power ramping step and a difference of the first count value minus 1 are linearly correlated.

As one embodiment, the technical feature of "the power ramping step and the first count value are used together for determining a transmit power value of the first signal" comprises the following meaning: the transmit power value of the first signal is equal to a smaller value of a first upper limit value and a first power value, the first upper limit value is a maximum output power at which the first node device is configured, and the first power value and a product of the power ramping step and the first count value are linearly correlated.

As one embodiment, a unit of the transmit power value of the first signal is dBm.

As one embodiment, a unit of the transmit power value of the first signal is mW.

As one embodiment, the transmit power value of the first signal is no greater than a maximum output power value at which the first node device is configured in the first cell.

As one embodiment, the transmit power value of the first signal is no greater than a maximum output power value at which the first node device is configured in the cell to which the first PDCCH belongs.

As one embodiment, the transmit power value of the first signal is no greater than a smaller value of a maximum output power value at which the first node device is configured in the first cell or a maximum output power value at which the first node device is configured in the cell to which the first PDCCH belongs.

As one embodiment, the technical feature of "the power ramping step and the first count value are used together for determining a transmit power value of the first signal" is achieved by satisfying the following equation:

$$P_{\mathrm{PRACH},b,f,c}(i) = \min\{P_{\mathrm{CMAX},f,c}(i), P_{\mathrm{PRACH,target},f,c} + PL_{b,f,c}\}[\mathrm{dBm}]$$

wherein $P_{\mathrm{PRACH},b,f,c}(i)$ represents a transmit power value of the first signal, $P_{\mathrm{CMAX},f,c}(i)$ represents the maximum output power value at which the first node device is configured, $PL_{b,f,c}$ represents a path loss in an uplink BWP $b$ on a carrier $f$ of the first cell *c*, and $P_{\text{PRACH,target},f,c}$ is equal to a sum of a preamble reception target power of configuration and a product value of the power ramping step value and a difference of the first count value minus 1.

As one embodiment, the technical feature of "the power ramping step and the first count value are used together for determining a transmit power value of the first signal" is achieved by satisfying the following equation:

$$P_{\text{PRACH},b,f,c}(i) = \min\{P_{\text{CMAX},f,c}(i), P_{\text{PRACH,target},f,c} + PL_{b,f,c}\}[\text{dBm}]$$

wherein $P_{\text{PRACH},b,f,c}(i)$ represents a transmit power value of the first signal, $P_{\text{CMAX},f,c}(i)$ represents the maximum output power value at which the first node device is configured, $PL_{b,f,c}$ represents a path loss in an uplink BWP *b* on a carrier *f* of the first cell *c*, and $P_{\text{PRACH,target},f,c}$ is equal to a sum of a preamble reception target power of configuration and a product value of the power ramping step value and the first count value.

As one embodiment, the technical feature of "the power ramping step and the first count value are used together for determining a transmit power value of the first signal" is achieved by satisfying the following equation:

$$P_{\text{PRACH},b,f,c}(i) = \min\{P_{\text{CMAX},f,c}(i), P_{\text{PRACH,target},f,c} + PL_{b,f,c}\}[\text{dBm}]$$

wherein $P_{\text{PRACH},b,f,c}(i)$ represents a transmit power value of the first signal, $P_{\text{CMAX},f,c}(i)$ represents the maximum output power value at which the first node device is configured, $PL_{b,f,c}$ represents a path loss in an uplink BWP *b* on a carrier *f* of the first cell *c*, and $P_{\text{PRACH,target},f,c}$ is equal to a sum of a preamble reception target power of configuration, a product of the power ramping step and a difference of the first count value minus 1, and a configured power offset value.

## Embodiment 12

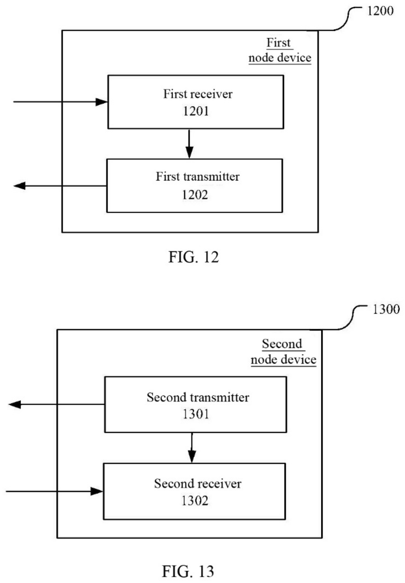

Embodiment 12 illustrates a structural block diagram of a processing device in a first node device according to one embodiment, as shown in FIG. 12. In FIG. 12, a processing device 1200 of the first node device comprises a first receiver 1201 and a first transmitter 1202. The first receiver 1201 comprises a transmitting device/receiving device 456 (comprising an antenna 460), a receiving processor 452, and a controller/processor 490 in FIG. 4 of the present application; and the first transmitter 1202 comprises a transmitting device/receiving device 456 (comprising an antenna 460), a transmitting processor 455, and a controller/processor 490 in FIG. 4 of the present application.

In Embodiment 12, the first receiver 1201 receives a first PDCCH; the first transmitter 1202 transmits a first signal, wherein the first PDCCH is used for triggering transmission of the first signal, and the first signal carries a random access preamble sequence; the first receiver 1201 receives a second PDCCH, wherein the second PDCCH is used for responding to the first signal; and the first transmitter 1202 transmits a first feedback information block, the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

As one embodiment, a time interval length between the first PDCCH and the first signal in time domain is not less than a first threshold, and a relationship between the first cell and the cell to which the first PDCCH belongs is used for determining the first threshold.

As one embodiment, the second PDCCH carries a first identifier, and the first identifier is equal to an RNTI carried by the first PDCCH, or an air interface resource occupied by the first signal and an index value with which the first cell is associated are used together for determining the first identifier.

As one embodiment, the second PDCCH belongs to a target time window in time domain, and at least one of a time length of the target time window or a start moment of the target time window is configured through signaling; and the target time window and a random access response window associated with the cell to which the first PDCCH belongs are different.

As one embodiment, the target information block comprises at least one of both of the index value of the air interface resource occupied by the first signal or the index value with which the first cell is associated.

As one embodiment, the second PDCCH is used for determining a time-frequency resource occupied by the target information block, and at least one of both of the second PDCCH or the target information block is used for determining a time interval length between the target information block and the first feedback information block; or the second PDCCH carries the target information block, and the target information block is used for determining a time interval length between the second PDCCH and the first feedback information block.

As one embodiment, the first receiver 1201 receives a first information block, wherein the first information block is used for determining a power ramping step, the first PDCCH is used for determining a first count value, and the power ramping step and the first count value are used together for determining a transmit power value of the first signal.

## Embodiment 13

Embodiment 13 illustrates a structural block diagram of a processing device in a second node device according to one embodiment, as shown in FIG. 13. In FIG. 13, a processing device 1300 of the second node device comprises a second transmitter 1301 and a second receiver 1302. The second transmitter 1301 comprises a transmitting device/receiving device 416 (comprising an antenna 460), a transmitting processor 415, and a controller/processor 440 in FIG. 4 of the present application; and the second receiver 1302 comprises a transmitting device/receiving device 416 (comprising an antenna 460), a receiving processor 412, and a controller/processor 440 in FIG. 4 of the present application.

In Embodiment 13, the second transmitter 1301 transmits a first PDCCH; the second receiver 1302 receives a first signal, wherein the first PDCCH is used for triggering transmission of the first signal, and the first signal carries a random access preamble sequence; the second transmitter 1301 transmits a second PDCCH, wherein the second PDCCH is used for responding to the first signal; and the second receiver 1302 receives a first feedback information block, the first signal is associated with a first cell, and the first cell is a cell other than a cell to which the first PDCCH belongs; and the second PDCCH is used for determining a target information block, the target information block is used for determining a timing advance value for the first cell, and the first feedback information block is used for indicating whether the target information block is valid.

As one embodiment, a time interval length between the first PDCCH and the first signal in time domain is not less than a first threshold, and a relationship between the first cell and the cell to which the first PDCCH belongs is used for determining the first threshold.

As one embodiment, the second PDCCH carries a first identifier, and the first identifier is equal to an RNTI carried by the first PDCCH, or an air interface resource occupied by the first signal and an index value with which the first cell is associated are used together for determining the first identifier.

As one embodiment, the second PDCCH belongs to a target time window in time domain, and at least one of a time length of the target time window or a start moment of the target time window is configured through signaling; and the target time window and a random access response window associated with the cell to which the first PDCCH belongs are different.

As one embodiment, the target information block comprises at least one of both of the index value of the air interface resource occupied by the first signal or the index value with which the first cell is associated.

As one embodiment, the second PDCCH is used for determining a time-frequency resource occupied by the target information block, and at least one of both of the second PDCCH or the target information block is used for determining a time interval length between the target information block and the first feedback information block; or the second PDCCH carries the target information block, and the target information block is used for determining a time interval length between the second PDCCH and the first feedback information block.

As one embodiment, the second transmitter 1301 transmits a first information block, wherein the first information block is used for determining a power ramping step, the first PDCCH is used for determining a first count value, and the power ramping step and the first count value are used together for determining a transmit power value of the first signal.

Those ordinarily skilled in the art can understand that all or some of the steps in the above method can be completed by instructing relevant hardware through a program, and the program can be stored in a computer-readable storage medium, for example, a read-only memory and a hard disk or an optical disk. Optionally, all or some of the steps in the above embodiment can also be implemented using one or more integrated circuits. Accordingly, each module unit in the above embodiment can be implemented in the form of hardware or in the form of a software function module. The present application is not limited to any specific form of software and hardware combination. The first node device or second node device or UE or terminal in the present application comprises but is not limited to a mobile phone, a tablet computer, a notebook computer, a network access card, a low-power device, an eMTC device, an NB-IoT device, a vehicle-mounted communication device, an aircraft, an airplane, a drone, a remote-controlled aircraft, and another wireless communication device. The base station device or base station or network side device in the present application comprises but is not limited to a macrocell base station, a microcell base station, a home base station, a relay base station, an eNB, a gNB, a transmitter receiver point TRP, a relay satellite, a satellite base station, an aerial base station, and another wireless communication device.

Those skilled in the art will appreciate that the present invention may be practiced in other designated forms without departing from its core or basic features. Therefore, the embodiments disclosed at present should be regarded as descriptive rather than restrictive in any way. The scope of the present invention is determined by the appended claims rather than the foregoing descriptions, and all changes within their equivalent meanings and areas are deemed to be included therein.

**EP 4 683 422 A1**

**Claims**

1. A first node device used in wireless communication, comprising:

a first receiver receiving a first PDCCH, wherein the first PDCCH carries all or part of fields in a DCI format 1_0, and a frequency domain resource assignment field included in DCI carried by the first PDCCH is equal to all "1";
a first transmitter transmitting a first signal, wherein the first PDCCH is used for triggering transmission of the first signal, and the first signal carries a random access preamble sequence;
the first receiver receiving a second PDCCH, wherein the second PDCCH is used for responding to the first signal;
the first transmitter transmitting a first feedback information block,
wherein the first signal is associated with a first cell, the first signal is used for obtaining a timing advance for the first cell, the first cell is a cell other than a cell to which the first PDCCH belongs, and the first cell and the cell to which the first PDCCH belongs are different; and the second PDCCH is used for determining a target information block, a DCI format transported on the second PDCCH is used for scheduling a PDSCH carrying the target information block, the target information block is used for determining a timing advance value for the first cell, and the first feedback information block is used for indicating whether the target information block is valid.

2. The first node device according to claim 1, wherein a time interval length between the first PDCCH and the first signal in time domain is not less than a first threshold, and a relationship between both of the first cell and the cell to which the first PDCCH belongs is used for determining the first threshold.

3. The first node device according to claim 2, wherein the relationship between both of the first cell and the cell to which the first PDCCH belongs is used for determining a value of a parameter $\Delta_{BWPSwitching}$ used when the first threshold is calculated, the relationship between both of the first cell and the cell to which the first PDCCH belongs is used for determining a value of a parameter $\Delta_{LTM}$ used when the first threshold is calculated, and the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$.

4. The first node device according to claim 2 or 3, wherein the time interval length between the first PDCCH and the first signal in time domain is a time interval length between a latest symbol of reception of the first PDCCH and an earliest symbol of transport of the first signal, and a unit of the first threshold is millisecond; and the relationship between both of the first cell and the cell to which the first PDCCH belongs comprises: whether the first cell and the cell to which the first PDCCH belongs are both serving cells.

5. The first node device according to any one of claims 2 to 4, wherein a target parameter value is used for determining the first threshold; when the relationship between both of the first cell and the cell to which the first PDCCH belongs is a first relationship, the target parameter value is equal to a first candidate value; when the relationship between both of the first cell and the cell to which the first PDCCH belongs is a second relationship, the target parameter value is equal to a second candidate value; and the first threshold and the target parameter value are linearly correlated, the first candidate value and the second candidate value are not equal, the first candidate value is predefined, and the second candidate value is predefined, or is configurable, or is related to a capability of the first node device.

6. The first node device according to any one of claims 1 to 5, wherein the second PDCCH carries a first identifier, and the first identifier is equal to an RNTI carried by the first PDCCH; and CRC of a DCI format carried by the second PDCCH is scrambled by the first identifier, and the first identifier is a C-RNTI.

7. The first node device according to any one of claims 1 to 6, wherein the target information block comprises at least one of both of an index value of an air interface resource occupied by the first signal or an index value associated with the first cell; and the index value of the air interface resource occupied by the first signal comprises an index of the random access preamble sequence carried by the first signal, and the index value associated with the first cell is an index value or an identifier value indicated by one field in one IE of the first cell.

8. The first node device according to any one of claims 1 to 7, wherein the second PDCCH is used for determining a time-frequency resource occupied by the target information block, and at least one of both of the second PDCCH or the target information block is used for determining a time interval length between the target information block and the first feedback information block; and the time interval length between the target information block and the first feedback information block is expressed by a quantity of slots, the time interval length between the target information block and the first feedback information block is a time interval length between a physical channel carrying the target information block and a physical channel carrying the first feedback information block.

9. The first node device according to any one of claims 1 to 8, comprising:

the first receiver receiving a first information block,
wherein the first information block is used for determining a power ramping step, the first PDCCH is used for determining a first count value, the power ramping step and the first count value are used together for determining a transmit power value of the first signal, and the power ramping step is equal to one of 0 dB, 2 dB, 4 dB, or 6 dB.

10. The first node device according to claim 9, wherein the first information block comprises all or part of LTM configuration information, the first information block comprises all or part of an IE "RACH-ConfigGeneric", the first information block comprises a field "powerRampingStep", and the first information block is for the first cell.

11. The first node device according to claim 9 or 10, wherein the power ramping step is equal to a power ramping step of a PRACH configured for the first cell, and the transmit power value of the first signal is no greater than a maximum output power value at which a sender of the first signal is configured in the cell to which the first PDCCH belongs; and the first count value is used for retransmission counting of the PRACH.

12. The first node device according to any one of claims 9 to 11, wherein the transmit power value of the first signal is equal to a smaller value between both of a first upper limit value and a first power value, the first upper limit value is a maximum output power at which the sender of the first signal is configured, and the first power value is linearly correlated with a product value of the power ramping step and a difference of the first count value minus 1.

13. The first node device according to any one of claims 1 to 12, wherein the first feedback information block comprises a HARQ-ACK bit, and all or part of the first feedback information block is used for explicitly or implicitly indicating whether a transport block comprising the target information block is correctly decoded;
or first feedback information is used for explicitly or implicitly indicating successful completion of cell handover, and the first feedback information is transmitted on a destination cell of LTM.

14. The first node device according to any one of claims 1 to 13, wherein the first signal is a PRACH, the first signal is used in a random access procedure and an LTM procedure, and the first signal and the second PDCCH belong to the same LTM procedure.

15. The first node device according to any one of claims 1 to 14, wherein a time-frequency resource and/or a sequence occupied by the first signal and the index value associated with the first cell are configured in a same PDCCH order.

16. The first node device according to any one of claims 1 to 15, wherein the first PDCCH is used for explicitly or implicitly indicating a resource occupied by the first signal, the first PDCCH is used for explicitly or implicitly indicating the random access preamble sequence carried by the first signal, and the first PDCCH is used for explicitly or implicitly indicating an index of an SS/PBCH associated with the first signal; at least one field in DCI carried by the second PDCCH is used for explicitly or implicitly indicating the time-frequency resource occupied by the target information block, and a time-frequency resource occupied by the second PDCCH is used for determining the time-frequency resource occupied by the target information block; and the second PDCCH is further used for determining a redundancy version used by the physical channel carrying the target information block, a modulation coding scheme employed by the physical channel carrying the target information block, and mapping between a virtual resource block and a physical resource block.

17. The first node device according to any one of claims 1 to 16, wherein the first PDCCH and the second PDCCH belong to a same cell, and $N_{TA}$ of the first signal for a downlink frame of the first cell is equal to 0.

18. The first node device according to any one of claims 1 to 17, wherein the first cell is a non-serving cell configured as a special cell, and the first cell is a candidate of the destination cell of LTM; and the first cell is one of a plurality of cells indicated (or provided) by higher-layer signaling or a higher-layer parameter, and the first PDCCH is used for indicating the first cell from the plurality of cells.

19. The first node device according to any one of claims 1 to 18, wherein all or part of the target information block is used for explicitly or implicitly indicating a value of $T_{TA}$ for the first cell; and the capability of the first node device is used for indicating support for LTM, or the capability of the first node device is used for indicating support for reception of the second PDCCH in LTM.

20. A second node device used in wireless communication, comprising:

   a second transmitter transmitting a first PDCCH, wherein the first PDCCH carries all or part of fields in a DCI format 1_0, and a frequency domain resource assignment field included in DCI carried by the first PDCCH is equal to all "1";
   a second receiver receiving a first signal, wherein the first PDCCH is used for triggering transmission of the first signal, and the first signal carries a random access preamble sequence;
   the second transmitter transmitting a second PDCCH, wherein the second PDCCH is used for responding to the first signal; and
   the second receiver receiving a first feedback information block,
   wherein the first signal is associated with a first cell, the first signal is used for obtaining a timing advance for the first cell, the first cell is a cell other than a cell to which the first PDCCH belongs, and the first cell and the cell to which the first PDCCH belongs are different; and the second PDCCH is used for determining a target information block, a DCI format transported on the second PDCCH is used for scheduling a PDSCH carrying the target information block, the target information block is used for determining a timing advance value for the first cell, and the first feedback information block is used for indicating whether the target information block is valid.

21. The second node device according to claim 20, wherein a time interval length between the first PDCCH and the first signal in time domain is not less than a first threshold, and a relationship between both of the first cell and the cell to which the first PDCCH belongs is used for determining the first threshold.

22. The second node device according to claim 21, wherein the relationship between both of the first cell and the cell to which the first PDCCH belongs is used for determining a value of a parameter $\Delta_{BWPSwitching}$ used when the first threshold is calculated, the relationship between both of the first cell and the cell to which the first PDCCH belongs is used for determining a value of a parameter $\Delta_{LTM}$ used when the first threshold is calculated, and the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$.

23. The second node device according to claim 21 or 22, wherein the time interval length between the first PDCCH and the first signal in time domain is a time interval length between a latest symbol of reception of the first PDCCH and an earliest symbol of transport of the first signal, and a unit of the first threshold is millisecond; and the relationship between both of the first cell and the cell to which the first PDCCH belongs comprises: whether the first cell and the cell to which the first PDCCH belongs are both serving cells.

24. The second node device according to any one of claims 21 to 23, wherein a target parameter value is used for determining the first threshold; when the relationship between both of the first cell and the cell to which the first PDCCH belongs is a first relationship, the target parameter value is equal to a first candidate value; when the relationship between both of the first cell and the cell to which the first PDCCH belongs is a second relationship, the target parameter value is equal to a second candidate value; and the first threshold and the target parameter value are linearly correlated, the first candidate value and the second candidate value are not equal, the first candidate value is predefined, and the second candidate value is predefined, or is configurable, or is related to a capability of a sender of the first signal.

25. The second node device according to any one of claims 20 to 24, wherein the second PDCCH carries a first identifier, and the first identifier is equal to an RNTI carried by the first PDCCH; and CRC of a DCI format carried by the second PDCCH is scrambled by the first identifier, and the first identifier is a C-RNTI.

26. The second node device according to any one of claims 20 to 25, wherein the target information block comprises at least one of both of an index value of an air interface resource occupied by the first signal or an index value associated with the first cell; and the index value of the air interface resource occupied by the first signal comprises an index of the random access preamble sequence carried by the first signal, and the index value associated with the first cell is an index value or an identifier value indicated by one field in one IE of the first cell.

27. The second node device according to any one of claims 20 to 26, wherein the second PDCCH is used for determining a time-frequency resource occupied by the target information block, and at least one of both of the second PDCCH or the target information block is used for determining a time interval length between the target information block and the first feedback information block; and the time interval length between the target information block and the first feedback information block is expressed by a quantity of slots, the time interval length between the target information block and the first feedback information block is a time interval length between a physical channel carrying the target information block and a physical channel carrying the first feedback information block.

28. The second node device according to any one of claims 20 to 27, comprising:

the second transmitter transmitting a first information block,
wherein the first information block is used for determining a power ramping step, the first PDCCH is used for determining a first count value, the power ramping step and the first count value are used together for determining a transmit power value of the first signal, and the power ramping step is equal to one of 0 dB, 2 dB, 4 dB, or 6 dB.

29. The second node device according to claim 28, wherein the first information block comprises all or part of LTM configuration information, the first information block comprises all or part of an IE "RACH-ConfigGeneric", the first information block comprises a field "powerRampingStep", and the first information block is for the first cell.

30. The second node device according to claim 28 or 29, wherein the power ramping step is equal to a power ramping step of a PRACH configured for the first cell, and the transmit power value of the first signal is no greater than a maximum output power value at which a sender of the first signal is configured in the cell to which the first PDCCH belongs; and the first count value is used for retransmission counting of the PRACH.

31. The second node device according to any one of claims 28 to 30, wherein the transmit power value of the first signal is equal to a smaller value between both of a first upper limit value and a first power value, the first upper limit value is a maximum output power at which the sender of the first signal is configured, and the first power value is linearly correlated with a product value of the power ramping step and a difference of the first count value minus 1.

32. The second node device according to any one of claims 20 to 31, wherein the first feedback information block comprises a HARQ-ACK bit, and all or part of the first feedback information block is used for explicitly or implicitly indicating whether a transport block comprising the target information block is correctly decoded;
or first feedback information is used for explicitly or implicitly indicating successful completion of cell handover, and the first feedback information is transmitted on a destination cell of LTM.

33. The second node device according to any one of claims 20 to 32, wherein the first signal is a PRACH, the first signal is used in a random access procedure and an LTM procedure, and the first signal and the second PDCCH belong to the same LTM procedure.

34. The second node device according to any one of claims 20 to 33, wherein a time-frequency resource and/or a sequence occupied by the first signal and the index value associated with the first cell are configured in a same PDCCH order.

35. The second node device according to any one of claims 20 to 34, wherein the first PDCCH is used for explicitly or implicitly indicating a resource occupied by the first signal, the first PDCCH is used for explicitly or implicitly indicating the random access preamble sequence carried by the first signal, and the first PDCCH is used for explicitly or implicitly indicating an index of an SS/PBCH associated with the first signal; at least one field in DCI carried by the second PDCCH is used for explicitly or implicitly indicating the time-frequency resource occupied by the target information block, and a time-frequency resource occupied by the second PDCCH is used for determining the time-frequency resource occupied by the target information block; and the second PDCCH is further used for determining a redundancy version used by the physical channel carrying the target information block, a modulation coding scheme employed by the physical channel carrying the target information block, and mapping between a virtual resource block and a physical resource block.

36. The second node device according to any one of claims 20 to 35, wherein the first PDCCH and the second PDCCH belong to a same cell, and $N_{TA}$ of the first signal for a downlink frame of the first cell is equal to 0.

37. The second node device according to any one of claims 20 to 36, wherein the first cell is a non-serving cell configured as a special cell, and the first cell is a candidate of the destination cell of LTM; and the first cell is one of a plurality of cells indicated (or provided) by higher-layer signaling or a higher-layer parameter, and the first PDCCH is used for indicating the first cell from the plurality of cells.

38. The second node device according to any one of claims 20 to 37, wherein all or part of the target information block is used for explicitly or implicitly indicating a value of $T_{TA}$ for the first cell; and the capability of the sender of the first signal is used for indicating support for LTM, or the capability of the sender of the first signal is used for indicating support for reception of the second PDCCH in LTM.

**39.** A method used in a first node for wireless communication, comprising:

receiving a first PDCCH, wherein the first PDCCH carries all or part of fields in a DCI format 1_0, and a frequency domain resource assignment field included in DCI carried by the first PDCCH is equal to all "1" ;
transmitting a first signal, wherein the first PDCCH is used for triggering transmission of the first signal, and the first signal carries a random access preamble sequence;
receiving a second PDCCH, wherein the second PDCCH is used for responding to the first signal;
transmitting a first feedback information block,
wherein the first signal is associated with a first cell, the first signal is used for obtaining a timing advance for the first cell, the first cell is a cell other than a cell to which the first PDCCH belongs, and the first cell and the cell to which the first PDCCH belongs are different; and the second PDCCH is used for determining a target information block, a DCI format transported on the second PDCCH is used for scheduling a PDSCH carrying the target information block, the target information block is used for determining a timing advance value for the first cell, and the first feedback information block is used for indicating whether the target information block is valid.

**40.** The method used in a first node according to claim 39, wherein a time interval length between the first PDCCH and the first signal in time domain is not less than a first threshold, and a relationship between both of the first cell and the cell to which the first PDCCH belongs is used for determining the first threshold.

**41.** The method used in a first node according to claim 40, wherein the relationship between both of the first cell and the cell to which the first PDCCH belongs is used for determining a value of a parameter $\Delta_{BWPSwitching}$ used when the first threshold is calculated, the relationship between both of the first cell and the cell to which the first PDCCH belongs is used for determining a value of a parameter $\Delta_{LTM}$ used when the first threshold is calculated, and the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$.

**42.** The method used in a first node according to claim 40 or 41, wherein the time interval length between the first PDCCH and the first signal in time domain is a time interval length between a latest symbol of reception of the first PDCCH and an earliest symbol of transport of the first signal, and a unit of the first threshold is millisecond; and the relationship between both of the first cell and the cell to which the first PDCCH belongs comprises: whether the first cell and the cell to which the first PDCCH belongs are both serving cells.

**43.** The method used in a first node according to any one of claims 40 to 42, wherein a target parameter value is used for determining the first threshold; when the relationship between both of the first cell and the cell to which the first PDCCH belongs is a first relationship, the target parameter value is equal to a first candidate value; when the relationship between both of the first cell and the cell to which the first PDCCH belongs is a second relationship, the target parameter value is equal to a second candidate value; and the first threshold and the target parameter value are linearly correlated, the first candidate value and the second candidate value are not equal, the first candidate value is predefined, and the second candidate value is predefined, or is configurable, or is related to a capability of the first node device.

**44.** The method used in a first node according to any one of claims 39 to 43, wherein the second PDCCH carries a first identifier, and the first identifier is equal to an RNTI carried by the first PDCCH; and CRC of a DCI format carried by the second PDCCH is scrambled by the first identifier, and the first identifier is a C-RNTI.

**45.** The method used in a first node according to any one of claims 39 to 44, wherein the target information block comprises at least one of both of an index value of an air interface resource occupied by the first signal or an index value associated with the first cell; and the index value of the air interface resource occupied by the first signal comprises an index of the random access preamble sequence carried by the first signal, and the index value associated with the first cell is an index value or an identifier value indicated by one field in one IE of the first cell.

**46.** The method used in a first node according to any one of claims 39 to 45, wherein the second PDCCH is used for determining a time-frequency resource occupied by the target information block, and at least one of both of the second PDCCH or the target information block is used for determining a time interval length between the target information block and the first feedback information block; and the time interval length between the target information block and the first feedback information block is expressed by a quantity of slots, the time interval length between the target information block and the first feedback information block is a time interval length between a physical channel carrying the target information block and a physical channel carrying the first feedback information block.

47. The method used in a first node according to any one of claims 39 to 46, comprising:

receiving a first information block,
wherein the first information block is used for determining a power ramping step, the first PDCCH is used for determining a first count value, the power ramping step and the first count value are used together for determining a transmit power value of the first signal, and the power ramping step is equal to one of 0 dB, 2 dB, 4 dB, or 6 dB.

48. The method used in a first node according to claim 47, wherein the first information block comprises all or part of LTM configuration information, the first information block comprises all or part of an IE "RACH-ConfigGeneric", the first information block comprises a field "powerRampingStep", and the first information block is for the first cell.

49. The method used in a first node according to claim 47 or 48, wherein the power ramping step is equal to a power ramping step of a PRACH configured for the first cell, and the transmit power value of the first signal is no greater than a maximum output power value at which a sender of the first signal is configured in the cell to which the first PDCCH belongs; and the first count value is used for retransmission counting of the PRACH.

50. The method used in a first node according to any one of claims 47 to 49, wherein the transmit power value of the first signal is equal to a smaller value between both of a first upper limit value and a first power value, the first upper limit value is a maximum output power at which the sender of the first signal is configured, and the first power value is linearly correlated with a product value of the power ramping step and a difference of the first count value minus 1.

51. The method used in a first node according to any one of claims 39 to 50, wherein the first feedback information block comprises a HARQ-ACK bit, and all or part of the first feedback information block is used for explicitly or implicitly indicating whether a transport block comprising the target information block is correctly decoded; or first feedback information is used for explicitly or implicitly indicating successful completion of cell handover, and the first feedback information is transmitted on a destination cell of LTM.

52. The method used in a first node according to any one of claims 39 to 51, wherein the first signal is a PRACH, the first signal is used in a random access procedure and an LTM procedure, and the first signal and the second PDCCH belong to the same LTM procedure.

53. The method used in a first node according to any one of claims 39 to 52, wherein a time-frequency resource and/or a sequence occupied by the first signal and the index value associated with the first cell are configured in a same PDCCH order.

54. The method used in a first node according to any one of claims 39 to 53, wherein the first PDCCH is used for explicitly or implicitly indicating a resource occupied by the first signal, the first PDCCH is used for explicitly or implicitly indicating the random access preamble sequence carried by the first signal, and the first PDCCH is used for explicitly or implicitly indicating an index of an SS/PBCH associated with the first signal; at least one field in DCI carried by the second PDCCH is used for explicitly or implicitly indicating the time-frequency resource occupied by the target information block, and a time-frequency resource occupied by the second PDCCH is used for determining the time-frequency resource occupied by the target information block; and the second PDCCH is further used for determining a redundancy version used by the physical channel carrying the target information block, a modulation coding scheme employed by the physical channel carrying the target information block, and mapping between a virtual resource block and a physical resource block.

55. The method used in a first node according to any one of claims 39 to 54, wherein the first PDCCH and the second PDCCH belong to a same cell, and $N_{TA}$ of the first signal for a downlink frame of the first cell is equal to 0.

56. The method used in a first node according to any one of claims 39 to 55, wherein the first cell is a non-serving cell configured as a special cell, and the first cell is a candidate of the destination cell of LTM; and the first cell is one of a plurality of cells indicated (or provided) by higher-layer signaling or a higher-layer parameter, and the first PDCCH is used for indicating the first cell from the plurality of cells.

57. The method used in a first node according to any one of claims 39 to 56, wherein all or part of the target information block is used for explicitly or implicitly indicating a value of $T_{TA}$ for the first cell; and the capability of the first node device is used for indicating support for LTM, or the capability of the first node device is used for indicating support for reception of the second PDCCH in LTM.

58. A method used in a second node for wireless communication, comprising:

transmitting a first PDCCH, wherein the first PDCCH carries all or part of fields in a DCI format 1_0, and a frequency domain resource assignment field included in DCI carried by the first PDCCH is equal to all "1";
receiving a first signal, wherein the first PDCCH is used for triggering transmission of the first signal, and the first signal carries a random access preamble sequence;
transmitting a second PDCCH, wherein the second PDCCH is used for responding to the first signal; and receiving a first feedback information block,
wherein the first signal is associated with a first cell, the first signal is used for obtaining a timing advance for the first cell, the first cell is a cell other than a cell to which the first PDCCH belongs, and the first cell and the cell to which the first PDCCH belongs are different; and the second PDCCH is used for determining a target information block, a DCI format transported on the second PDCCH is used for scheduling a PDSCH carrying the target information block, the target information block is used for determining a timing advance value for the first cell, and the first feedback information block is used for indicating whether the target information block is valid.

59. The method used in a second node according to claim 58, wherein a time interval length between the first PDCCH and the first signal in time domain is not less than a first threshold, and a relationship between both of the first cell and the cell to which the first PDCCH belongs is used for determining the first threshold.

60. The method used in a second node according to claim 59, wherein the relationship between both of the first cell and the cell to which the first PDCCH belongs is used for determining a value of a parameter $\Delta_{BWPSwitching}$ used when the first threshold is calculated, the relationship between both of the first cell and the cell to which the first PDCCH belongs is used for determining a value of a parameter $\Delta_{LTM}$ used when the first threshold is calculated, and the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$.

61. The method used in a second node according to claim 59 or 60, wherein the time interval length between the first PDCCH and the first signal in time domain is a time interval length between a latest symbol of reception of the first PDCCH and an earliest symbol of transport of the first signal, and a unit of the first threshold is millisecond; and the relationship between both of the first cell and the cell to which the first PDCCH belongs comprises: whether the first cell and the cell to which the first PDCCH belongs are both serving cells.

62. The method used in a second node according to any one of claims 59 to 61, wherein a target parameter value is used for determining the first threshold; when the relationship between both of the first cell and the cell to which the first PDCCH belongs is a first relationship, the target parameter value is equal to a first candidate value; when the relationship between both of the first cell and the cell to which the first PDCCH belongs is a second relationship, the target parameter value is equal to a second candidate value; and the first threshold and the target parameter value are linearly correlated, the first candidate value and the second candidate value are not equal, the first candidate value is predefined, and the second candidate value is predefined, or is configurable, or is related to a capability of a sender of the first signal.

63. The method used in a second node according to any one of claims 58 to 62, wherein the second PDCCH carries a first identifier, and the first identifier is equal to an RNTI carried by the first PDCCH; and CRC of a DCI format carried by the second PDCCH is scrambled by the first identifier, and the first identifier is a C-RNTI.

64. The method used in a second node according to any one of claims 58 to 63, wherein the target information block comprises at least one of both of an index value of an air interface resource occupied by the first signal or an index value associated with the first cell; and the index value of the air interface resource occupied by the first signal comprises an index of the random access preamble sequence carried by the first signal, and the index value associated with the first cell is an index value or an identifier value indicated by one field in one IE of the first cell.

65. The method used in a second node according to any one of claims 58 to 64, wherein the second PDCCH is used for determining a time-frequency resource occupied by the target information block, and at least one of both of the second PDCCH or the target information block is used for determining a time interval length between the target information block and the first feedback information block; and the time interval length between the target information block and the first feedback information block is expressed by a quantity of slots, the time interval length between the target information block and the first feedback information block is a time interval length between a physical channel carrying the target information block and a physical channel carrying the first feedback information block.

66. The method used in a second node according to any one of claims 58 to 65, comprising:

transmitting a first information block,
wherein the first information block is used for determining a power ramping step, the first PDCCH is used for determining a first count value, the power ramping step and the first count value are used together for determining a transmit power value of the first signal, and the power ramping step is equal to one of 0 dB, 2 dB, 4 dB, or 6 dB.

67. The method used in a second node according to claim 66, wherein the first information block comprises all or part of LTM configuration information, the first information block comprises all or part of an IE "RACH-ConfigGeneric", the first information block comprises a field "powerRampingStep", and the first information block is for the first cell.

68. The method used in a second node according to claim 66 or 67, wherein the power ramping step is equal to a power ramping step of a PRACH configured for the first cell, and the transmit power value of the first signal is no greater than a maximum output power value at which a sender of the first signal is configured in the cell to which the first PDCCH belongs; and the first count value is used for retransmission counting of the PRACH.

69. The method used in a second node according to any one of claims 66 to 68, wherein the transmit power value of the first signal is equal to a smaller value between both of a first upper limit value and a first power value, the first upper limit value is a maximum output power at which the sender of the first signal is configured, and the first power value is linearly correlated with a product value of the power ramping step and a difference of the first count value minus 1.

70. The method used in a second node according to any one of claims 58 to 69, wherein the first feedback information block comprises a HARQ-ACK bit, and all or part of the first feedback information block is used for explicitly or implicitly indicating whether a transport block comprising the target information block is correctly decoded;
or first feedback information is used for explicitly or implicitly indicating successful completion of cell handover, and the first feedback information is transmitted on a destination cell of LTM.

71. The method used in a second node according to any one of claims 58 to 70, wherein the first signal is a PRACH, the first signal is used in a random access procedure and an LTM procedure, and the first signal and the second PDCCH belong to the same LTM procedure.

72. The method used in a second node according to any one of claims 58 to 71, wherein a time-frequency resource and/or a sequence occupied by the first signal and the index value associated with the first cell are configured in a same PDCCH order.

73. The method used in a second node according to any one of claims 58 to 72, wherein the first PDCCH is used for explicitly or implicitly indicating a resource occupied by the first signal, the first PDCCH is used for explicitly or implicitly indicating the random access preamble sequence carried by the first signal, and the first PDCCH is used for explicitly or implicitly indicating an index of an SS/PBCH associated with the first signal; at least one field in DCI carried by the second PDCCH is used for explicitly or implicitly indicating the time-frequency resource occupied by the target information block, and a time-frequency resource occupied by the second PDCCH is used for determining the time-frequency resource occupied by the target information block; and the second PDCCH is further used for determining a redundancy version used by the physical channel carrying the target information block, a modulation coding scheme employed by the physical channel carrying the target information block, and mapping between a virtual resource block and a physical resource block.

74. The method used in a second node according to any one of claims 58 to 73, wherein the first PDCCH and the second PDCCH belong to a same cell, and $N_{TA}$ of the first signal for a downlink frame of the first cell is equal to 0.

75. The method used in a second node according to any one of claims 58 to 74, wherein the first cell is a non-serving cell configured as a special cell, and the first cell is a candidate of the destination cell of LTM; and the first cell is one of a plurality of cells indicated (or provided) by higher-layer signaling or a higher-layer parameter, and the first PDCCH is used for indicating the first cell from the plurality of cells.

76. The method used in a second node according to any one of claims 38 to 75, wherein all or part of the target information block is used for explicitly or implicitly indicating a value of $T_{TA}$ for the first cell; and the capability of the sender of the first signal is used for indicating support for LTM, or the capability of the sender of the first signal is used for indicating support for reception of the second PDCCH in LTM.

| Receive a first PDCCH | —101 |
| Transmit a first signal | —102 |
| Receive a second PDCCH | —103 |
| Transmit a first feedback information block | —104 |

100

FIG. 1

5GS/EPS 200

NR-RAN/EUTRAN 202

HSS/UDM 220

UE 201

NR/Evolved Node B 203

Other NR/Evolved Node B 204

MME/AMF/SMF 211

Other MME/AMF/SMF 214

S-GW/UPF 212

P-GW/UPF 213

UE 241

Internet service 230

5GC/EPC 210

FIG. 2

Control plane 300

L3 — RRC 306
L2 — PDCP 304
305 — RLC 303
MAC 302
L1 — PHY 301

User plane 350

L2 — SDAP 356
355 — PDCP 354
RLC 353
MAC 352
L1 — PHY 351

FIG. 3

400        450

420   460

415   416   456   455

Transmitting processor 415

Transmitting device / Receiving device 416

Transmitting device / Receiving device 456

Transmitting processor 455

440   420   460   490

Controller/Processor 440

Controller/Processor 490

Memory 430

Receiving processor 412

Transmitting device / Receiving device 416

Transmitting device / Receiving device 456

Receiving processor 452

Memory 480

430   412   416   456   452   480

FIG. 4

## FIG. 5

**N500. Second node**

S501. Transmit a first information block

→ First information block →

S551. Receive first information block

S502. Transmit a first PDCCH

→ First PDCCH →

S552. Receive a first PDCCH

S553. Transmit a first signal

← First signal ←

S503. Receive a first signal

S504. Transmit a second PDCCH

→ Second PDCCH →

S554. Receive a second PDCCH

S555. Transmit a first feedback information block

← First feedback information block ←

S505. Receive a first feedback information block

**U550. First node**

End          End

FIG. 5

☒ First PDCCH          ▨ First signal

First threshold

Time interval

Time

FIG. 6

| DCI format | CRC |

Scramble

First identifier

Case A

| DCI format | CRC |

First identifier

Case B

FIG. 7

...

FIG. 8

FIG. 9

Case A

Case B

FIG. 10

FIG. 11

1200

First
node device

First receiver
1201

First transmitter
1202

FIG. 12

1300

Second
node device

Second transmitter
1301

Second receiver
1302

FIG. 13

## INTERNATIONAL SEARCH REPORT

| International application No. |
| --- |
| **PCT/CN2024/080904** |

| A. | CLASSIFICATION OF SUBJECT MATTER |
| --- | --- |

H04W 74/08(2024.01)i

According to International Patent Classification (IPC) or to both national classification and IPC

| B. | FIELDS SEARCHED |
| --- | --- |

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

3GPP, CNTXT, WPABS, ENTXT, DWPI, VEN: 切换, 移动, 层1, 层2, L1, L2, PDCCH, DCI, 资源分配, 频域, 全1, 随机接入前导, 定时提前, 有效, handover, mobility, Layer 1, Layer 2, resource allocation, frequency domain, random access preamble, timing advance, valid

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2022201562 A1 (SHANGHAI LANGBO COMMUNICATION TECHNOLOGY COMPANY LIMITED) 23 June 2022 (2022-06-23) <br> description, paragraphs 0005-0059 | 1-76 |
| A | US 2023048866 A1 (ZTE CORP.) 16 February 2023 (2023-02-16) <br> entire document | 1-76 |
| A | WO 2021022489 A1 (GUANGDONG OPPO MOBILE TELECOMMUNICATIONS CORP., LTD.) 11 February 2021 (2021-02-11) <br> entire document | 1-76 |
| A | NEC. "Discussion on CSI enhancement for multi-TRP transmission" <br> *3GPP TSG RAN WG1 #102-e R1-2005755*, 28 August 2020 (2020-08-28), <br> entire document | 1-76 |
| A | VIVO. "Discussion on L1/L2-Centric Inter-Cell Mobility" <br> *3GPP TSG-RAN WG2 Meeting #114-e R2-2104908 (Revision of R2-2102855)*, <br> 27 May 2021 (2021-05-27), <br> entire document | 1-76 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 June 2024** | **17 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080904**

| Patent document cited in search report | | | Publication date (day/month/year) | Patent family member(s) | | | Publication date (day/month/year) |
|---|---|---|---|---|---|---|---|
| US | 2022201562 | A1 | 23 June 2022 | CN | 114666021 | A | 24 June 2022 |
| US | 2023048866 | A1 | 16 February 2023 | WO | 2021147880 | A1 | 29 July 2021 |
| | | | | CN | 111901831 | A | 06 November 2020 |
| | | | | VN | 90566 | A | 25 October 2022 |
| WO | 2021022489 | A1 | 11 February 2021 | CN | 113615245 | A | 05 November 2021 |

Form PCT/ISA/210 (patent family annex) (July 2022)